# EUROPEAN PATENT SPECIFICATION

(11) **EP 3 422 229 B1**
(45) Date of publication and mention of the grant of the patent: **28.07.2021**
(21) Application number: 18180850.2
(22) Date of filing: 29.06.2018
(51) Int. Cl.: G06F 21/31, G06F 21/32, G06F 21/44, G06F 21/45, H04L 29/06, H04W 12/06

(54) **TERMINAL AUTHENTICATION**
TERMINALAUTHENTIFIZIERUNG
AUTHENTIFICATION D'UN TERMINAL

(30) Priority: 29.06.2017 FR 1756027; 29.06.2017 US 201715637162
(43) Date of publication of application: 02.01.2019
(73) Proprietor: Amadeus S.A.S., 06410 Biot (FR)
(72) Inventor: MAAROUFI, Mohamed-Amine, 06600 Antibes (FR); BARRAS, Alexandre, 06650 Opio (FR); CHOUKOUK, Ayoub, 06600 Antibes (FR)
(74) Representative: Samson & Partner Patentanwälte mbB

(56) References cited:
- EP-A1- 1 669 833
- US-A1- 2014 123 255
- JAN SPOOREN ET AL: "Mobile device fingerprinting considered harmful for risk-based authentication", SYSTEM SECURITY, ACM, 2 PENN PLAZA, SUITE 701 NEW YORK NY 10121-0701 USA, 21 April 2015 (2015-04-21), pages 1-6, XP058067309, DOI: 10.1145/2751323.2751329 ISBN: 978-1-4503-3479-2
- DAVY PREUVENEERS ET AL: "SmartAuth : dynamic context fingerprinting for continuous user authentication", PROCEEDINGS OF THE 30TH ANNUAL ACM SYMPOSIUM ON APPLIED COMPUTING, 1 January 2015 (2015-01-01), pages 2185-2191, XP055449374, DOI: 10.1145/2695664.2695908 ISBN: 978-1-4503-3196-8
- SAMUEL OSWALD HUNTER ET AL: "Remote fingerprinting and multisensor data fusion", INFORMATION SECURITY FOR SOUTH AFRICA (ISSA), 2012, IEEE, 15 August 2012 (2012-08-15), pages 1-8, XP032258538, DOI: 10.1109/ISSA.2012.6320449 ISBN: 978-1-4673-2160-0
- FURKAN ALACA ET AL: "Device fingerprinting for augmenting web authentication", COMPUTER SECURITY APPLICATIONS, ACM, 2 PENN PLAZA, SUITE 701 NEW YORK NY 10121-0701 USA, 5 December 2016 (2016-12-05), pages 289-301, XP058306826, DOI: 10.1145/2991079.2991091 ISBN: 978-1-4503-4771-6

## Description

### FIELD OF THE INVENTION

The present invention generally relates to terminal authentication. More specifically, the invention relates to generating a secure password and secure login flows.

### BACKGROUND

Various password generation and terminal or user authentication mechanisms are known.

For example, US 2006/117377 A1 (also published as EP 1 669 833 A1) refers to creating a signature based on extracted internal hardware component information or external data (such as GPS, biometric sensor, smartcard data). The created signature is compared with a reference signature and, in response to the comparison, allowing or denying access to a transaction or a service

EP 2614458 A2 relates to strengthened authentification based on the collecting of data representative of hardware components contained in a system. The method includes a detection and collection of a list of hardware components of the system on the basis of the information collected by the operating system.

Furthermore, US 2013/191724 A1 relates to hardware information extraction by a plugin or java applet from computer or phone in order to support generation of a webpage. Hardware components of the computer or phone accessible by the operating system are detected and digital information of reference characterizing the computer or phone (referred to as "digital DNA" or DDNA) are generated. The digital information is transmitted to the web server and stored there.

JAN SPOOREN et al., "Mobile device fingerprinting considered harmful for risk-based authentication", SYSTEM SECURITY, ACM, 2 PENN PLAZA, SUITE 701 NEW YORK NY 10121-0701 USA, concerns an analysis of the variability and the predictability of mobile device fingerprints.

DAVY PREUVENEERS et al., "SmartAuth: dynamic context fingerprinting for continuous user authentication", PROCEEDINGS OF THE 30TH ANNUAL ACM SYMPOSIUM ON APPLIED COMPUTING, concerns a scalable context-aware authentication framework which uses adaptive and dynamic context fingerprinting based on Hoeffding trees to continuously ascertain whether a user's identity is authentic or not.

SAMUEL OSWALD HUNTER ET AL, "Remote fingerprinting and multisensor data fusion", INFORMATION SECURITY FOR SOUTH AFRICA (ISSA), 2012, IEEE, concerns multiple host-defining metrics and a process of host tracking through the use of two fingerprinting techniques.

### SUMMARY

Today, authentication is often time consuming and user needs to remember his password, but strong classic passwords are hard to remember and can be stolen easily. Some authentication procedures include multiple stages where the user has input credentials and verification information multiple times. Password-less authentication generally requires additional equipment or devices such as fingerprint or iris scanners.

It is an object to provide authentication with increased security without compromising user usability and increase system complexity.

These objects are addressed and solved by the independent claims. So, the present invention is defined by the independent claims. The dependent claims define embodiments thereof.

According to a first aspect, a method is provided to authenticate a terminal with a server based on a selected set of multiple environmental factors. Each of the multiple environmental factors relates to a configurable characteristic of the terminal. Each of the multiple environmental factor is defined at least by an identifier and a value. The identifier identifies a respective environmental factor and the value indicates a state of the respective configurable characteristic. The selected set of multiple environmental factors constitute a customized environmental authentication information for authenticating the terminal with the server. The method is performed by the terminal.

The terminal registers, at a first point of time, a registration environmental authentication information of the terminal. To this end, for at least some of the environmental factors of the selected set multiple environemental factors, the respective state of the related configurable characteristic of the terminal is set to a given state at the first point of time. Next, the terminal extracts, for each of the selected set of multiple environmental factors, the respective state of the related configurable characteristic of the terminal at the first point of time and sets the respective value of each of the multiple environmental factors depending on the respective state at the first point of time. The terminal generates the registration environmental authentication information based on the values of the multiple environmental factors set at the first point of time. The terminal sends the registration environmental authentication information to the server for storing the first environmental authentication information.

The terminal authenticates with the server at a second point of time later than the first point of time. To this end, the terminal extracts, for at least a plurality of the multiple environmental factors, the respective state of the related configurable characteristic of the terminal at the second point of time and sets the respective value of each of the plurality of the multiple environmental factors depending on the respective state at the second point of time. The terminal generates a current environmental authentication information based on the values of the multiple environmental factors set at the second point of time. The terminal sends the current environmental authentication information to the server for authenticating the terminal with the server.

According to a second aspect, a terminal is provided which is arranged to implement the method above.

According to a third aspect, a computer program product is provided which implements the method above when being executed on the terminal.

According to a fourth aspect, a method to authenticate a terminal with a server based on a selected set of multiple environmental factors. Each of the multiple environmental factors relates to a configurable characteristic of the terminal. Each of the multiple environmental factor is defined at least by an identifier and a value. The identifier identifies a respective environmental factor and the value indicates a state of the respective configurable characteristic. The selected set of multiple environmental factors constitute a customized environmental authentication information for authenticating the terminal with the server. The method is performed by the server.

At a first point of time, the terminal is registered with the server based on a registration environmental authentication information of the terminal. To this end, the server receives the registration environmental authentication information from the terminal. The server stores the registration environmental authentication information.

The server authenticates the terminal at a second point of time later than the first point of time. To this end, the server receives a current environmental authentication information from the terminal. The server compares the received current environmental authentication information with the stored registration environmental authentication information. In response to determining that the current customized environmental authentication information is substantially identical to the registration environmental authentication information, the server authenticates the terminal.

According to a fifth aspect, a server is provided which is arranged to implement the method above.

According to a sixth aspect, a computer program is provided which implements the method above when being executed on the server.

Further aspects are set forth by the dependent claims.

### BRIEF DESCRIPTION OF THE FIGURES

The present invention will be described with reference to accompanying figures. Similar reference numbers generally indicate identical or functionally similar elements.
FIG. 1 schematically depicts a system with a server and multiple terminals.
FIG. 2 is a flow chart for a password generation and registration process.
FIG. 3 is a flow chart for authentication process.
FIGS. 4 and 5 relate to two variants of environmental control factors.
FIGS. 6, 7 and 8 relate to three variants of a progressive environmental password.
FIG. 9 visualizes a first implementation embodiment for registering an environmental password and authenticating a terminal.
FIG. 10 visualizes a second implementation embodiment for registering an environmental password and authenticating a terminal.
FIG. 11 visualizes a third implementation embodiment for registering an environmental password and authenticating a terminal.
FIGS. 12 and 13 visualize a fourth implementation embodiment for registering an environmental password and authenticating a terminal.
FIG. 14 is an exemplary schematic view of the internal architecture of the database table and/or a request client.

### DETAILED DESCRIPTION

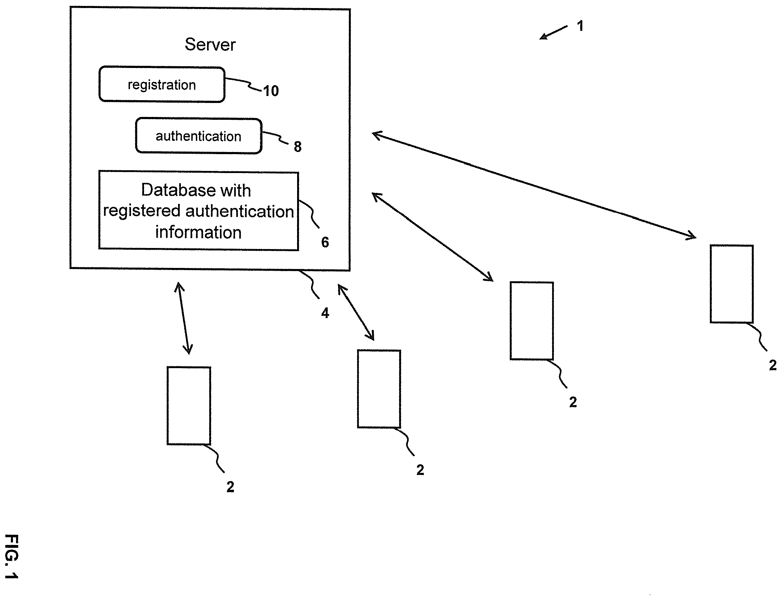

A new authentication procedure is described to authenticate a terminal or a user of a terminal. With reference to FIG. 1, the terminal 2 encompasses all sorts of stationary or mobile user or client machines such as personal computers, laptops, tablet computers, phones, smartphones, television devices, etc. The authentication procedure may be employed for any sorts of authentication either on the terminal itself or on a remote machine. For example, a user authenticates herself/himself locally on the terminal as an authorized person for a local service implemented by a server process running on the terminal 2 or remotely on a server machine as an authorized person for a remote service implemented by a service process running on the remote server machine. Hence, the server 4 as used herein encompasses both, server processes running remote from the terminal 2 on any remote server machine as well as local server processes running locally on the terminal itself.

The terminals 2 and server 4 are connected by any suitable communiation interface such as a network connection via the Internet. The server 4 includes a database 6 for storing registration environmal authentication information as described below. The database 6 may be a relational database using a relational database management system (RDBMS). The server may also include functional sub-components such as a registration module 10 and an authentication module 8. Similar counterpart functional modules may also be present on the terminal. Terminals 2 and server 4 form system 1.

The authentication procedure is described herein is based on multiple characteristics of the terminal 2. At least some of these multiple characteristics of the terminal 2 are configurable and/or hardware-independent and therefore generall dynamically changeable. Thus, the terms configurable characteristic and hardware-independent characteristic refer to the current variable configuration of the terminal, i.e. configuration states of elements of the terminal, the elements including software elements, hardware elements, as well as connectable peripheral devices and their dynamically changeable configuration states, but not fixed characteristics of permanently present hardware elements of the terminal which are not dynamically changed by the user or the terminal (e.g. size of a harddisk or model/serial number of a network card). These dynamically changeable terminal characteristics are also referred to as environmental factors because they represent at least a part of the dynamically changeable setup and environment of the terminal. The term environment likewise generally refers to all specific characteristics of the terminal 2, including dynamically changeable configuration aspects, software present on and/or executed by the terminal 2 and/or states or sub-states of the terminal 2 constituted by user input. To this end, the term state refers to all dynamically changeable configuration states of the current configuration of the terminal elements.

Examples of environmental factors are:
- one or more of a storage content of the terminal,
- software processes currently running on the terminal, such as the number, types or specific processes running on the terminal at a point of time,
- software programs installed on the terminal, including sub-states of installed software programs such as the existance of a particular plug-in for a particular software program,
- an operating system of the terminal, such as a specific version of the terminal's operating system,
- a current state of a web browser application currently executed by the terminal,
- one or more aspects of a current system configuration of the terminal, such as a screen luminosity, a system volume, and a display resolution,
- a connection to an external storage drive,
- one or more currently opened files, including a number or minimum number of opened files and/or specific opened files,
- a state of a part of a file system of the terminal, such as the existance of a particular folder and/or the number of files in this particular folder,
- a time elapsed since a state of an certain environmental factor is established, e.g. a minimum time since a USB drive has been inserted, and
- a user input, such as a password set by the user, a fingerprint, or one or more gestures input by the user via the terminal.

The present authentication process can be based any of these environmental factors, any subset of these environmental factors, including multiple individual instances of each environmental factor (such as the existance of three particular folders in the file system of the terminal 2 and/or the number of files stored in each of the three particular folders), or all of these environmental factors. In addition to a plurality of these environmental factors, the authentication procedure may also be based on one or more classic hardware-based factors or terminal-external information such as a fingerprint of the user. The actual environmental and optional hardware-based factors used for the authentication procedure are selected by the user of the terminal and/or prescribed by a policy which is e.g. set by an administrator.

The selected environmental factors (and optional hardware-based factors) are used to compose a password for authentication. To this end, each of the selected set of multiple environmental factors is associated with a respective identifier for referencing the environmental factor and for each of the multiple environmental factors, a respective state of the related configurable hardware-independent characteristic of the terminal is determined. An environmental factor is thus defined by at least two parameters, namely:
identifier: a unique identifier of the environmental factor in order to reference to the environmental factor, may serve as a key or index depending on the implemention,
value: state of the configurable hardware-independent characteristic of the terminal. Depending on the terminal characteristic of the environmental factor, an environmental factor is of a certain value type, such as discrete values, discrete values specified by a value list (also referred to as enumerated type), or non-discrete values, complex data types, etc..

In practice, the authentication procedure will be based on a larger number of environmental factors such as at least five, at least ten or least twenty environmental factors which relate to various aspects of the terminal's environment and are thus well-diversed in order to promote security. For reasons of illustration, examples described herein use a smaller number of environmental factors. A simple example of a set of environmental factors employed for authenticating the terminal is:

| Environmental factor | Identifier | Value |
|---|---|---|
| operating system | 0 | MS Windows® 10 |
| number of files in folder C:\Users\User\Desktop | 1 | 12 |
| USB flash drive inserted in USB slot | 2 | yes |
| Browser application executed with first tab set to www.amadeus.com | 3 | yes |

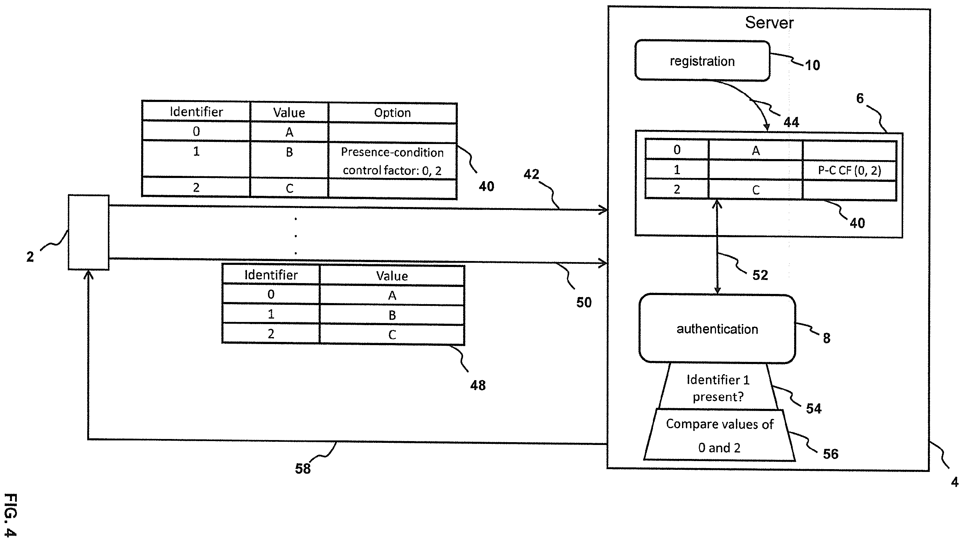

The selected set of multiple environmental factors, in particular the values of the environmental factors, constitute a customized environmental authentication information for authenticating the terminal with the server, i.e. an environmental password. The authentication procedure generally includes two phases, a - usually one-time - registration phase in order to setup and store an environmental password, referred to as registration environmental authentication information, and an authentication phase which is performed after the registration (visualized by the three dots in FIGS. 4 to 12) each time the user or terminal 2 is to be authenticated and which includes a comparison of current environmental authentication information (i.e. environmental authentication information established by the terminal at authentication time) with the registered environmental authentication information.

Both phases are implemented by respective computer program routines which are stored and executed at the terminal and at the server side. In some embodiments, the functionalities described herein are implemented by a web-based service, so that the terminal's environmental data is extracted by a browser plugin as well as a dedicated software (such as the operating system of the terminal). In other embodiments, the functionalities described herein are implemented by an application installed and executed on the terminal 2.

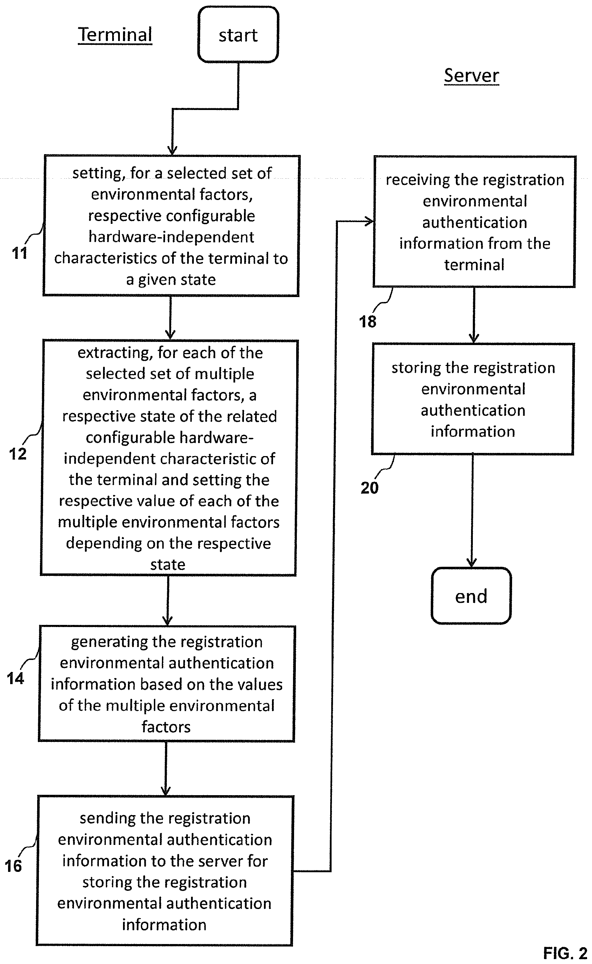

### Registration (FIG. 2)

In order to register an environmental password at a first point of time, the terminal collects environmental data available at the terminal. In some embodiments, the user first chooses the environmental factors to be included in the environmental password and the current states of the chosen environmental factors are then determined at the terminal. More specifically, at 11, for at least some or each of the chosen environmental factors, the respective state of the related configurable hardware-independent characteristic of the terminal is set from its current arbitrary and often accidental configuration state to a given or specific state, in particular in accordance with authentication preferences of the user. Next, the terminal extracts, at 12, for each of the selected set of multiple environmental factors, the respective state of the related configurable hardware-independent characteristic of the terminal and sets the respective value of each of the selected multiple environmental factors depending on the respective state at the first point of time. In other embodiments, the terminal first collects all suitable environmental data and the user is then presented with a list of environmental factors and their respective states in order to select a set of environmental factors to be included in the environmental password. After the uses has selected the environmental factors, an environmental password is generated by the terminal, at 14, for registration with the server, which is also referred to as registration environmental authentication information of the terminal hereinafter.

After the registration environmental authentication information is generated, the generated registration environmental authentication information is sent, at 16, to the server. The server receives the environmental authentication information at 18 and stores the registration environmental authentication information e.g. in the database 6 at 20. The server links the registration environmental authentication information to an identifier associated with the terminal and/or user to be authenticated later. As mentioned above, the storage may occur locally at the terminal if the server is located locally as a server application running at the terminal, or may take place remotely if the server is a remote server.

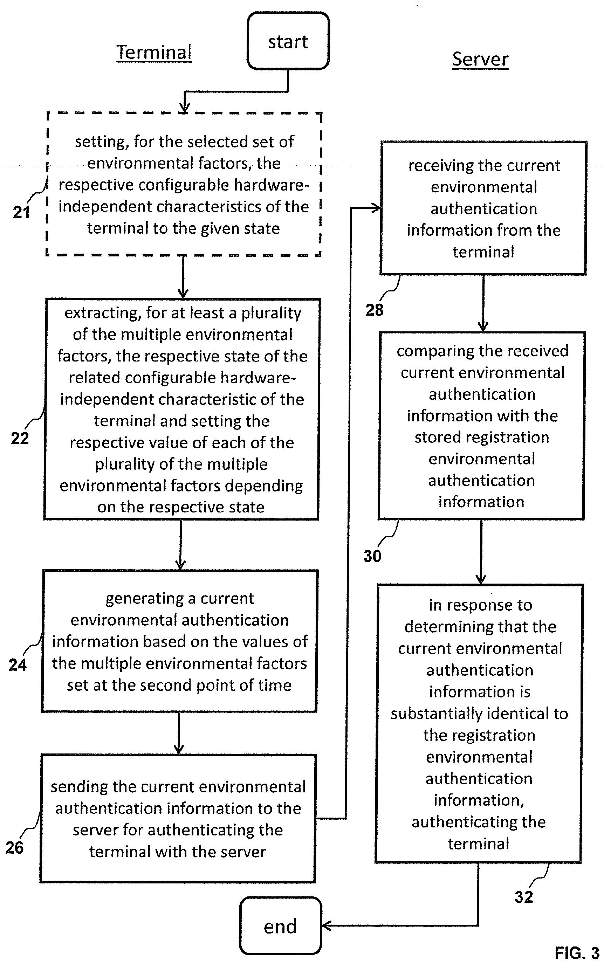

### Authentication (FIG. 3)

In order to authenticate the user/terminal at a second point of time later than the first point of time, the terminal again collects environmental data available at the terminal. This activity is similar to the environmental data collection at the registration phase, apart from the fact that the environmental factors are now predetermined (they have already been determined during the registration phase) and, thus, do not need to be selected anymore.

On the other hand, in some embodiments, not all predetermined environmental factors that have been set in the registration phase are used during the authentication phase, as will be explained in more detail below. In these embodiments, a subset of the predetermined environmental factors set during the registration phase are selected and their respective states is determined at the terminal.

For a successful authentication, at 21, the user and/or the terminal sets, for the selected set of environmental factors (or the subset of the environmental factors), the respective configurable hardware-independent characteristics of the terminal to the given state. Similar to a traditional password input, authentication will be successful if the configuration states of the hardware-independent characteristics of the terminal (substantially) correspond to the respective configuration states at registration time. If the configuration states of the hardware-independent characteristics are not set correctly (e.g. because the terminal is operated by a non-authorized user who is not aware of the correct states), authentication will fail.

Hence, the terminal extracts at 22, for at least a plurality of the set of multiple environmental factors selected in the registration phase, the respective state of the related configurable hardware-independent characteristic of the terminal at the second point of time and sets the respective value of each of the plurality of the selected set of multiple environmental factors depending on the respective state at the second point of time. In this manner, the terminal generates a current environmental password at 24, also referred to as current customized environmental authentication information, based on the values of the set of multiple environmental factors set at the second point of time. The terminal sends the current customized environmental authentication information to the server at 26 for authenticating the terminal with the server.

The server receives the current environmental authentication information from the terminal at 28 and compares the received current environmental authentication information at 30 with the registration environmental authentication information that was stored during the registration phase. If the server determines that the current environmental authentication information is substantially identical to the registration environmental authentication information, the server positively authenticates the terminal at 32, e.g. by returning an authentication confirmation message to the terminal. On the other hand, if the server determines that the current environmental authentication information is not substantially identical to the registration environmental authentication information, authentication fails and the server e.g. returns an authentication denial message to the terminal.

In order to ensure that the current environmental authentication information is substantially identical to the registration environmental authentication information, the values of the individual environmental factors constituting the current environmental authentication information need to be substantially identical to the values of the registration environmental authentication information. Hence, for a successful authentication, the terminal is to be put into the same state as the terminal was at the registration.

For some of the environmental factors which are subject to the usual system configuration of the terminal, this will automatically the case. With respect to the above simplified example, the first environmental factor with identifier = 1 will be determined to identical as long as the operation system of the terminal is not changed and the second environmental factor with identifier = 2 will be determined to be identical as long as the number of files in the folder C:\Users\User\Desktop is not changed relative to registration time. Other environmental factors depend on user behavior and the user intentionally sets the terminal to the correct states before authenticating. With respect to the above simplified example, the user inserts a USB flash drive into a USB slot of the terminal in order to set the value of the third environmental factor with identifier = 3 to yes. Likewise, the user either manually starts the browser and navigates the first tab to www.amadeus.com or the user has configured the terminal to automatically start the browser aplication (e.g. after activation of the terminal) and has configured the browser application to automatically navigate to www.amadeus.com so that no manual activity is required to set the value of the fourth environmental factor with identifier = 4 to yes.

Thus, the authentication procedure allows creating a customized password based on environmental factors of the terminal without requiring the user to remember the password. Rather, the user only sets a number of environmental factors constituting the current environmental authentication information into the correct respective state, while some of the environmental factors constituting the current environmental authentication information will be automatically set into the correct respective state by the terminal's system configuration. The environmental password generated at registration time can replace a classic password of a string of characters set by the user. The classic user password may also be maintained as one of the environmental factors. This is different from e.g. US 2013/191724 A1 which bases authentication on the sum of non-configured and thus arbitrary contextual data of computer components (such as current GPS coordinates) and, thus, does not allow for a customized password as taught herein.

The authentication approach also allows a strong authentication with a diversity of environmental factors and without using external devices. The authentication is also a one-step authentication regardless of the number of environmental factors.

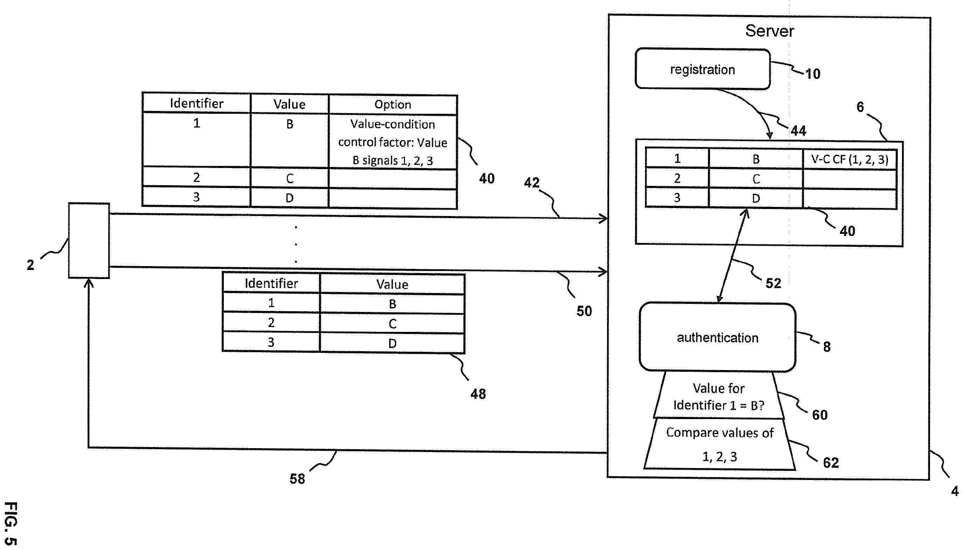

### Control environmental factors (FIGS. 4 and 5)

The present password generation, registration and authentication approach facilitate the possibility for the user to have different passwords, for example to be able to authenticate from different environments or user devices such as a mobile phone, a personal computer, and a laptop or tablet computer. Each of these different user devices associated to one and the same user will usually have different configuration features. As a consequence, the environmental factors to be included in the environmental password and the current states of the environmental factors may vary across these different user devices. Therefore, the present approach includes a mechanism to generate and registrater a bundle of passwords including different environmental factors relating to the different user devices. More specifically, one or more of the environmental factors wherein are defined as a control factor when registering the registration environmental authentication information. The at least one control factor determines conditions for applying other environmental factors of the selected set of multiple environmental factors when authenticating the terminal with the server. In other words, at least one control factor controls which of the other registered environmental factors are actually be used for authenticating the terminal.

Different variants are envisaged to implement the control function of a control environmental factor. In some embodiments, the one or more control factors is a control factor by identifier meaning that already the presence of the control factor in the environmental authentication information indicates to the server to use a given subset of all the environmental factors registered to authenticate the terminal (FIG. 4). Hence, in these embodiments, the at least one control factor is defined as a presence-condition factor when registering the registration environmental authentication information, wherein an absence or a presence of the presence-condition factor in the current environmental authentication information determines which environmental factors of the multiple environmental factors form the plurality of the selected set of multiple environmental factors when authenticating the terminal with the server, i.e. the values of which environmental factors of the (potentially more) registered environmental factors for the user and/or terminal are to be compared in order to authenticate the terminal.

In other embodiments, the one or more control factors is a control factor by value meaning that not the mere presence of the control factor in the environmental authentication information, but the value of the control factor indicates to the server to use a given subset of all the environmental factors registered to authenticate the terminal (FIG. 5). Hence, in these embodiments, the at least one control factor is defined as a value-condition factor when registering the registration environmental authentication information, wherein the value of the value-condition factor included in the current environmental authentication information determines which environmental factors of the multiple environmental factors form the plurality of the selected set of multiple environmental factors when authenticating the terminal with the server.

In order to implement the concept of control environmental factors, the above-mentioned definition of the environmental factor is enlarged by a further third parameter in these embodiments, such as an option or control field which indicates whether or not an environmental factor is a control factor and, if affirmative, whether it is a presence-condition factor or a value-condition factor.

When the user and/or the terminal chooses the environmental factors in the registration phase, one or some of the chosen environmental factors are defined to be control factors. The registration environmental authentication information 40 sent from the terminal 2 to the server 4 (registration request 42 in FIGS. 4 and 5) includes the indication which environmental factors are control factors and, if applicable, whether they a control factor is a presence-condition factor (FIG. 4) or a value-condition factor (FIG. 5). The registration environmental authentication information 40 further includes an indication which of the environmental factors constitute the subset forming the environmental authentication information, e.g. the presence of control factor 1 in the environmental authentication information 48 signals that environmental factors 0 and 2, but not 3 form the environmental password for authenticating the terminal.

The server 4, more specificall registration module 10, then stores 44 the received registration environmental authentication information 40 in the database 6 and associates the control factors with the respective environmental factors. If the at least one control factor is defined as a presence-condition control factor (FIG. 4: "P-C CF"), only the identifier of the presence-condition factor is stored at the server 4, but not its value. If the at least one control factor is defined as a value-condition factor (FIG. 5: "V-C CF"), the server stores both identifier and value of the control factor. In some embodiments, the control factor data is stored in a dedicated table of the database 6.

The authentication phase includes the server 4 determining 52 whether one or more value-condition control factors have been registered for the user (FIG. 5). If affirmative, this at least one control factor included in the environmental authentication information 48 received from the terminal 2 is processed first and the server 4, more specifically authentication module 8, compares 60 the value of the at least one value-condition control factor to the value of the registered value-condition control factor. If both values are substantially identical, the server 4 continues with the authentication process by comparing 62 the values of all the environmental factors of the environmental authentication information identified by the value of the value-condition control factor with the values of the corresponding registered environmental factors. The server 4 then returns a positive or negative authentication response 58 to the terminal.

If the server 4 determines that no value of a registered value-condition control factor is equal to the corresponding values of the environmental factors included in the environmental authentication information received from the terminal, the server 4 considers the user as not registered in this particular terminal environment. The server 4 denies authentication of the user and terminal by returning a rejection response 58. Optionally, the server 4 asks the user to register a new environmental password for this terminal environment and e.g. to confirm the new environmental password with an external factor (another terminal for which another environmental authentication information including one or more control factors has already been registered).

If the registered environmental authentication information 48 includes a presence-condition control factor (FIG. 4) for the user, the the server verifies 54 the presence of this environmental factor (i.e. its identifier irrespective of its value) in the environmental authentication information received from the terminal, and if affirmative, authenticates the terminal on the basis of the environmental password (i.e. the subset of environmental factors) associated with the one or more presence-condition control factors. As described above, the server 4 compares 56 the values of the environmental factors prescribed by the presence of the at least one presence-condition control factor and returns a positive or negative authentication response 58 to the terminal.

To further facilitate understanding of the concept of presence-condition and value-condition control factors, the following non-limiting example is given using five environmental factors:

| Environmental factor | Identifier | Value |
|---|---|---|
| MS Outlook® installed | 0 | |
| mobile app "AeTM" installed | 1 | |
| WWW domain of the first tab in the browser application | 2 | |
| screen luminosity | 3 | |
| volume | 4 | |

Note that the different passwords for different terminal devices are composed by different factors in the present example, but different passwords can also be composed by the same factors with different values.

Assume that the user already has registered a default environmental authentication information including the two environmental factors volume (identifier 4) and domain of first browser tab (2) set to specific values. The user possesses a computer and a smartphone. In his computer, the user registers a new environmental authentication information composed by MS Outlook® installed (0), domain of the first tab (2) and screen luminosity (3) and specifies MS Outlook® installed as a presence-condition control factor because MS Outlook® is only installed on the computer, but not on the smartphone. In his smartphone, he registers another environmental authentication information composed by the environmental factors "AeTM" mobile app installed (1), screen luminosity (3) and volume (4) and sets "AeTM" mobile app installed as presence-condition control factor as "AeTM" mobile app is only present on the smartphone, but not on the computer. Registrations of the two additional passwords are only successful after the user has successfully authenticated himself based on the default environmental authentication information.

Thus, the user has registered three environmental passwords, such as:

**Default password:**

| Environmental factor | Identifier | Value | Option |
|---|---|---|---|
| WWW domain of the first tab in the browser application | 2 | www.amadeus.com | |
| volume | 4 | 23 | |

**Computer password:**

| Environmental factor | Identifier | Value | Option |
|---|---|---|---|
| MS Outlook® installed | 0 | yes | presence-condition control factor |
| WWW domain of the first tab in the browser application | 2 | www.amadeus.com | |
| screen luminosity | 3 | 50 | |

**Smartphone password:**

| Environmental factor | Identifier | Value | Option |
|---|---|---|---|
| mobile app "AeTM" installed | 1 | yes | presence-condition control factor |
| screen luminosity | 3 | 50 | |
| volume | 4 | 12 | |

When user logs in during the authentication phase, the server checks the presence of the identifier MS Outlook® installed (0) in the environmental authentication information received from the terminal. If the identifier 0 is found in the authentication information, the server determines the values of the three environmental factors MS Outlook® installed (0), domain of the first tab (2) and screen luminosity (3) for the authentication process. If the server determines that the identifier 0 is not present in the environmental authentication information, but identifier 1 "AeTM" mobile app installed is present in the environmental authentication information, the server determines the values of the three environmental factors "AeTM" mobile app installed (1), screen luminosity (3) and volume (4) for the authentication process. If the server does neither detect identifier 0 nor identifier 1 in the environmental authentication information, the default environmental password using volume (4) and domain of first browser tab (2) is checked.

In a variation of this example, the user has two computers, a private computer and a professional computer. He registers a different new environmental password with and for his private computer which is composed by three environmental factors MS Outlook® installed (0), domain of first browser tab (2) and screen luminosity (3), wherein he specifies the domain of first browser tab (2) factor set to value "XXX.fr" as a value-conditional control factor. With and for his professional computer, he registers another environmental password composed by three environmental factors MS Outlook® installed (0), domain of first browser tab (2) and volume (4). Again, the user sets the domain of first browser tab (2) factor as a value-conditional control factor, but now set to value "YYY.com" in order to signal authentication for the professional computer. Hence, the user again has registered three environmental passwords, such as:

**Default password:**

| Environmental factor | Identifier | Value | Option |
|---|---|---|---|
| WWW domain of the first tab in the browser application | 2 | www.amadeus.com | |
| volume | 4 | 23 | |

**Personal computer password:**

| Environmental factor | Identifier | Value | Option |
|---|---|---|---|
| MS Outlook® installed | 0 | yes | |
| WWW domain of the first tab in the browser application | 2 | XXX.fr | value-condition control factor |
| screen luminosity | 3 | 50 | |

**Professional computer password:**

| Environmental factor | Identifier | Value | Option |
|---|---|---|---|
| MS Outlook® installed | 0 | yes | |
| WWW domain of the first tab in the browser application | 2 | XXX.fr | value-condition control factor |
| volume | 4 | 23 | |

During the authentication phase, the user logs in either from his personal computer or from his professional computer. The server first checks the value of the value-conditional control factor, domain of first browser tab (2). If the value of the domain of first browser tab (2) is "XXX.fr", the server compares the values of the three environmental factors MS Outlook® installed (0), domain of the first tab (2) and screen luminosity (3) included in the environmental authentication information with the respective values previously registered during the registration phase. On the other hand, if the value of the domain of first browser tab (2) is "YYY.com", the server compares the values of the three environmental factors MS Outlook® installed (0), domain of the first tab (2) and volume (4) included in the authentication information with the respective values previously registered during the registration phase. If the value of the domain of first browser tab (2) is different from "XXX.fr" and "YYY.com", the server uses the default environmental password of the user.

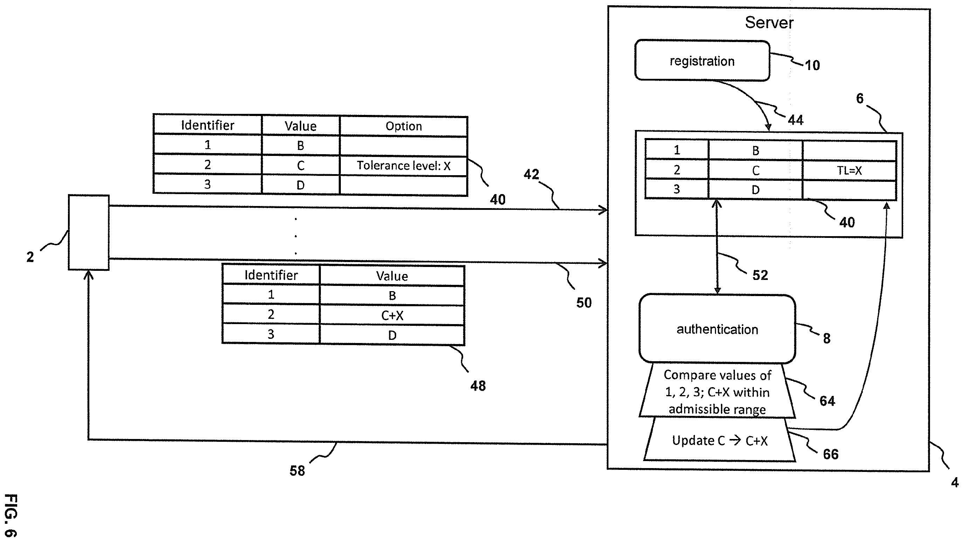

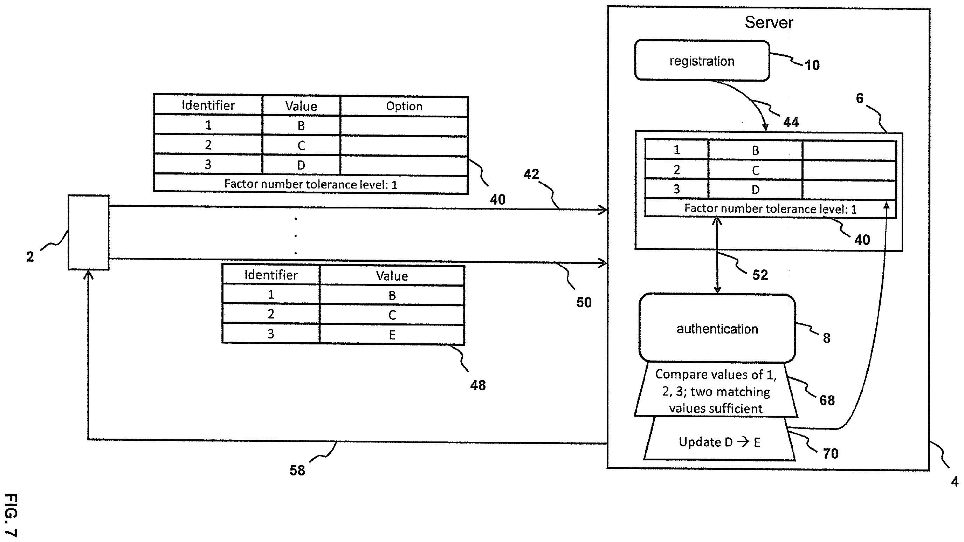

### Progressive Environmental Password (FIGS. 6 and 7)

In some embodiments and for some implementations, registered environmental authentication information may be updated automatically throught their lifetime depending changing states of the characteristics of the user terminal. This automatic update is also referred to as a progressive password. In general term, a progressive environmental password is a customized environmental authentication information that can be adapted to changing values of the environmental factors of the terminal of which the environmental authentication information is composed. As already described above, the values of the environmental factors of the terminal are not static, but may vary either depending on automatic reconfigurations of the terminal (e.g. due to software updates) or influenced by a new behaviour of the user.

To this end, in some embodiments, at least one of the multiple environmental factors is additionally defined by a tolerance level defining a range of admissible values of the at least one environmental factor within which the terminal is successfully authenticated (FIG. 6). As long as the value of an environmental factor is within the range defined by the tolerance level during authentication, it is considered to be substantially identical with the registered value.

A generic example is given by FIG. 6 according to which the environmental factor with identifier 2 and value C is supplemented by tolerance level X meaning that the server 4 considers all values within the range C-X to C+X to be identical with the registered value C during comparison 64. The server also stores values deviating from C being within the admissible range. If e.g. the terminal 2 has been successfully authenticated three times with value C+X, value C is updated 66 to value C+X.

With reference to one of the previous examples given below, a tolerance level may be defined for the number of files in a particular folder:

| Environmental factor | Identifier | Value | Option |
|---|---|---|---|
| operating system | 0 | MS Windows® 10 | |
| number of files in folder C:\Users\User\Desktop | 1 | 12 | Tolerance level: 3 |
| USB flash drive inserted in USB slot | 2 | yes | |
| Browser application executed with first tab set to www.amadeus.com | 3 | yes | |

Hence, in this example, the environmental factor "number of files in folder C:\Users\User\Desktop" was originally registered with the value of 12. However, at registration, the user (or the system automatically) also set a tolerance level of 3. The tolerance level thus forms a part of the registration environmental authentication information 40 and is stored by the server 4 during the registration phase in the database 6. In the authentication phase, the server successfully authenticates the terminal if the number of files in this folder is in the range between 9 to 15.

Automatic adaption of the environmental password is then implemented in the embodiments by updating the value of the at least one environmental factor included in the stored registration environmental authentication information with the value of the at least one environmental factor included in the current environmental authentication information in response to determining that the value of the at least one environmental factor included in the current environmental authentication information is within the range of admissible values defined by the tolerance level, but not identical to the value of the at least one environmental factor included in the stored registration environmental authentication information.

In the given example, the server stores the values of the environmental factor "number of files in folder C:\Users\User\Desktop" in the current environmental authentication information of previous authentications and thus forms a history of past authentication values. If the value deviates from the registered value (12 in the example) for a given number of times, but stays within the admissible range set by the tolerance level, the server then updates the registered value. For example, the user may have stored three additional files on his desktop of his terminal and the number of files thus has increased from 12 to 15. After having authenticated the terminal three times with a value of 15 for the environmental factor "number of files in folder C:\Users\User\Desktop", the server - having tracked the value history - automatically updates the registration environmental authentication information by changing the value of the factor "number of files in folder C:\Users\User\Desktop" from 12 to 15. The tolerance level may remain unchanged, i.e. the terminal is successfully authenticated from that point on as long as the factor "number of files in folder C:\Users\User\Desktop" has a value within the range of 12 to 18.

In the same or other embodiments, a tolerance level may (also) be defined at the level of numbers of environmental factors that have to be successfully matched during authentication (FIG. 7). This environmental factor number tolerance level is included in the registration environmental authentication information 40 and stored 44 by the server 4. Authentication of the terminal 2 is successful if the values of a number of environmental factors within the current environmental authentication information 48 are substantially identical with the values of the registration environmental authentication information 40. For example, an environmental password registered may be composed of 20 environmental factors with an environmental factor number tolerance level set to 3 meaning that at least 17 environmental factors out of the 20 registered factors have to match for successful authentication during the authentication phase. The tolerance level may also indicate the absolute minimum number of environmental factors that have to be substantially identical for successful authentication (in this example: 17).

In the more simplified example of FIG. 7, the factor number tolerance level is set to 1 meaning that only two of the three environmental factors identified by identifiers 1, 2, 3 need to match in order to successfully authenticate the terminal 2. Hence, in response to receiving authentication request 50, the server 4 compares 68 the values of all three environmental factors and recognizes matching values for the two environmental factors 1 and 2, while the value of environmental factor 3 does not match (D ≠ E).

The values of non-matching environmental factors are stored by the server in the course of a successful authentication procedure. For example, if the values of two of the 20 environmental factors are not substantially identical with the respective registered values, these two values are stored by the server. If the server determines after a certain number of successful authentications that the values of these mismatching environmental factors have been changed (e.g. the values of these mismatching environmental factors remain to be different from the registered values at a certain other value for a number of successful authentications), the server automatically updates the values of the continuing mismatching environmental factors to the new values received from the terminal during the last successful authentications.

In the simplified example of FIG. 7, if e.g. the terminal 2 has been successfully authenticated three times with value E for environmental factor 3, value D is updated 70 to value E. As a further more specific example, the user may have reset the start page of the webbrowser application on his terminal from www.amadeus.com to http://www.amadeus.com/blog/ and may have updated the operating system of the terminal from Windows® 8 to Windows® 10, while the values of the other 18 environmental factors of the terminal are still identical to the respective registered values. After having successfully authenticated the terminal with the two new values http://www.amadeus.com/blog/ and Windows® 10 (which are tracked by the server), the server automatically updates the two registered values of these two environmental factors to the new values.

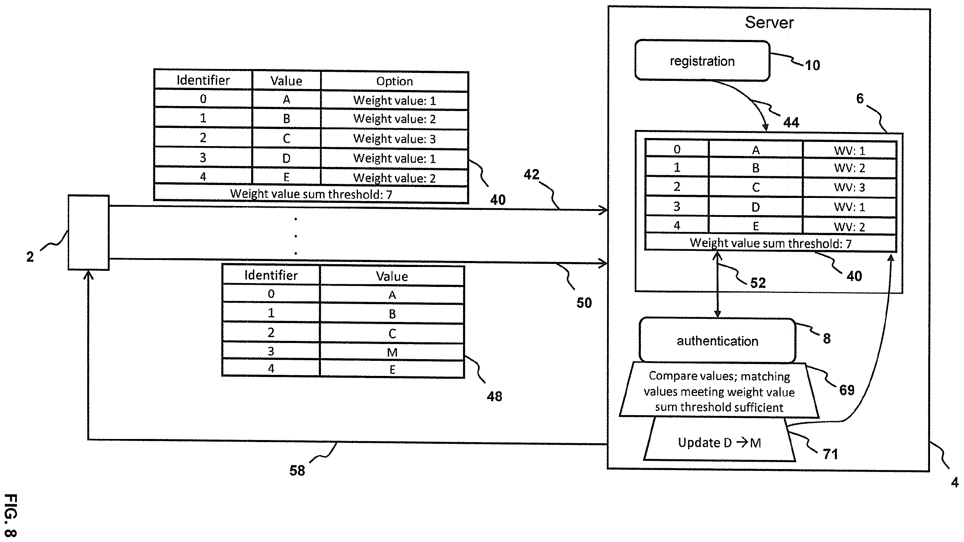

A further refined implementation option of a progressive environmental password utilizes weight values (FIG. 8). In these embodiments, which may be employed in addition or alternative to the examples of FIG. 6 and FIG. 7, each environmental factor is associated with a weight value and a weight value sum threshold may be set. The weight values of the individual environmental factors and the weight value sum threshold are included in the registration environmental authentication information 40 and stored 44 by the server 4. Authentication of the terminal 2 is successful if the sum of the weight values of environmental factors within the current environmental authentication information 48 which are substantially identical with the values of the registration environmental authentication information 40 is at or above the weight value sum threshold.

In the simplified example of FIG. 8, the registration environmental authentication information 40 includes five environmental factors, two of having a weight value of 1, two having a weight value of 2 and one having a weight value of 3. The weight value sum thrshold is set to 7 meaning that either the values of the environmental factors with identifiers 1, 2 and 4 or the environmental factors with identifiers 0, 2 and 3 and either 1 or 4 need to match in order to successfully authenticate the terminal 2. Hence, in response to receiving authentication request 50, the server 4 compares 69 the values of all five environmental factors and recognizes matching values for all environmental factors except environmental factor 3 (D ≠ M). The server 4 then calculates 69 the weight value sum of the four matching environmental factors (8) and compares 69 the calculated weight value sum with the weight value sum threshold of the registration environmental authentication information 40 (7). In response to determining 69 that the calculated weight value sum is at or above the weight value sum threshold of the registration environmental authentication information, the server 4 authenticates 58 the terminal 2. If the calculated weight value sum is below the weight value sum threshold of the registration environmental authentication information, authentication is rejected.

Similar to the previous examples of FIG. 6 and 7, the values of non-matching environmental factors are stored by the server in the course of a successful authentication procedure. Hence, in the simplified example of FIG. 8, if e.g. the terminal 2 has been successfully authenticated three times with value M for environmental factor 3, value D is updated 71 to value M.

Hence, the progressive environmental password is a password that changes over time with user behaviour and/or terminal reconfiguration within some well-defined limits.

In some embodiments implementing the concept of the progressive environmental password, a password profile is generated reflecting the changes in user behaviour and/or terminal configuration over time and automatically establishes or fine-tunes tolerance level. A password profile is an accumulation of non-hashed data sent from the terminal to the server during authentications and thus represents the history of matching and non-matching environmental factor values of past authentications. A password profile is thus created by collecting past environmental authentication information and evaluating non-matching environmental factor and their values that are within the value margins set by the tolerance levels. The profile is generated using machine learning algorithms and updated following long-term user behaviour and terminal configuration changes.

### Password Policy

In some embodiments, the password generation described herein is supported by a password policy. The password policy predefines a minimum number of environmental factors and/or specific environmental factors that are to be mandatorily included into the registration environmental authentication information and/or acceptable values for the environmental factors including optional tolerance levels for the values and/or weight values associated with the environmental factors. For example, a password policy is sensible for organization such as companies in order to ensure a certain minimum security level across all the environmental passwords registered for the users and devices of the organization.

The password policy may be implemented by using data records stored at server database storing the control data defining the password policy. Client software implementing the registration process at the terminal retrieves the password policy from the server database and forces the user to select the environmental factors and potentially configure the terminal with the values of the environmental factors prescribed by the password policy.

### Implementation variants

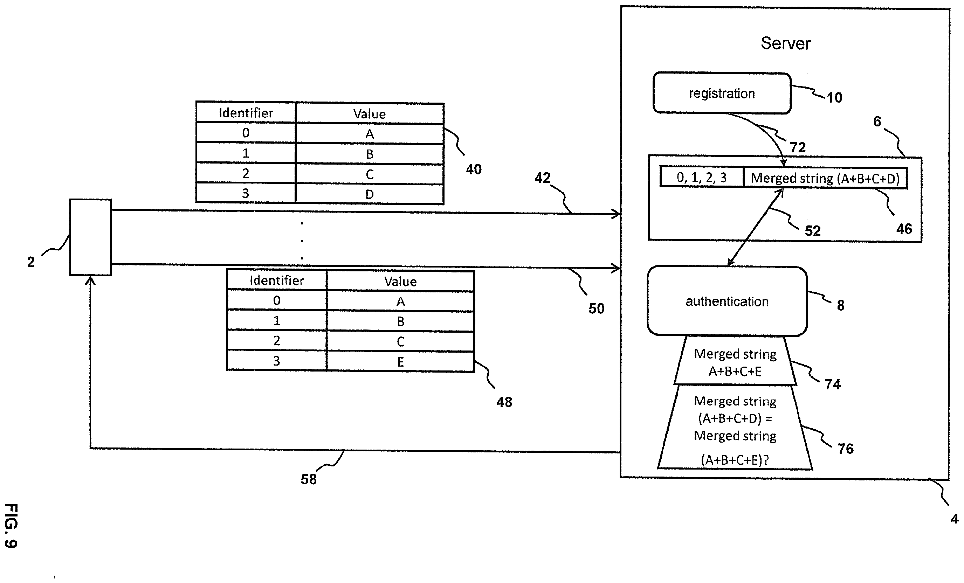

The mechanisms to register an environmental password and authenticate a terminal on the basis of the registered environmental password can be implemented various ways. Four possible implementation variants including different manners to store the environmental authentication information at the server with different options to support control factors and/or progressive passwords will be described next with reference to FIGS. 9-12.

### First embodiment: Merged authentication information (FIG. 9)

According to the first implementation embodiment, the server merges the values of all registered environmental factors. Hence, the registered environmental authentication information includes all identifiers of the individual environmental factors and a single value string resulting from the merging of the values of the individual environmental factors. Optionally, the value string are hashed by the server and thus stored as a hash value which is linked to the user and/or terminal. Merging of the values of the individual environmental factors is based on a defined order of the identifiers, i.e. the identifiers serve as indexes for the individual environmental factors.

A registration procedure and an authentication procedure according to the first implementation embodiment is shown by FIG. 9. After having established the registration environmental authentication information 40 in the manner described above, the terminal 2 sends the registration environmental authentication information 40 to the server 4 by registration request 42. Registration request 42 may indicate the tuples of identifier and value of each environmental factor as an indexed list schema. Registration request 42 also indicates that this message is a request to register an environmental password and also indicates the user and/or terminal such as a user ID or terminal ID to which the registration refers. In response to receiving the registration environmental authentication information 40, the server 4, more specifically the registration module 10, merges the received registration environmental authentication information 40 to form a discrete registration authentication string. For example, merging is done by concatenating all values in accordance with the order given by the identifiers of the individual environmental factors indicated in the registration request 42 and subsequently performing a hash function over the concatenated string. In the example of FIG. 9, the four environmental factors given by identifiers 0, 1, 2 and 3 and respective values A, B, C, D are transformed to a single data record 46 given by the set of ordered identifiers 0, 1, 2 and 3 as well as the merged discrete string A+B+C+D. The server 4 stores the resulting registration environmental authentication information 46 including the discrete registration authentication string in the database 6 (both activities of merging and storing are indicated by arrow 44 in FIG. 9). Storing includes linking the discrete registration authentication string to the terminal ID and/or user ID as well the list of identifiers received by registration request 42.

At authentication time, the terminal generates the current environmental authentication information 48. In the example of FIG. 9, the value of the fourth environmental factor identified by identifier 3 has a value (E) deviating from the registered value D. The terminal 2 sends the current environmental authentication information to the server by authentication request 50. In response to receiving the current environmental authentication information, the server 4, more specifically the authentication module 8, again merges 74 the received current environmental authentication information 48 using the same merging algorithm as in the registration phase to form a current discrete authentication string. In the example of FIG. 4, based on the ordered identifiers 0, 1, 2 and 3, the authentication module 8 generates 54 merged string A+B+C+E, retrieves 52 the registration environmental authentication information 46, more specifically registered merged string A+B+C+D, from the database 6, and compares 76 the current discrete authentication string A+B+C+E with the stored discrete registration authentication string A+B+C+D. In response to determining that the current discrete authentication string is identical to the stored discrete registration string, the server 4 authenticates the terminal 2. In the example of FIG. 8, authentication is unsuccessful at the two discrete authentication strings are not identical and server 4 returns a rejection message 58 indicating rejecting of the authentication request 50.

The first implementation embodiment has the technical advantage of being a simple procedure as authentication is similar to an authentication request based on a traditional password where also two discrete string are compared to each other. The main difference to a classic authentication process is the list of identifiers serving as indexes is stored by the server in order to facilitate merging the values of the individual environmental factors during authentication. The first implementation embodiment also requires less storage space in the server, compared to the other three implementation examples described below.

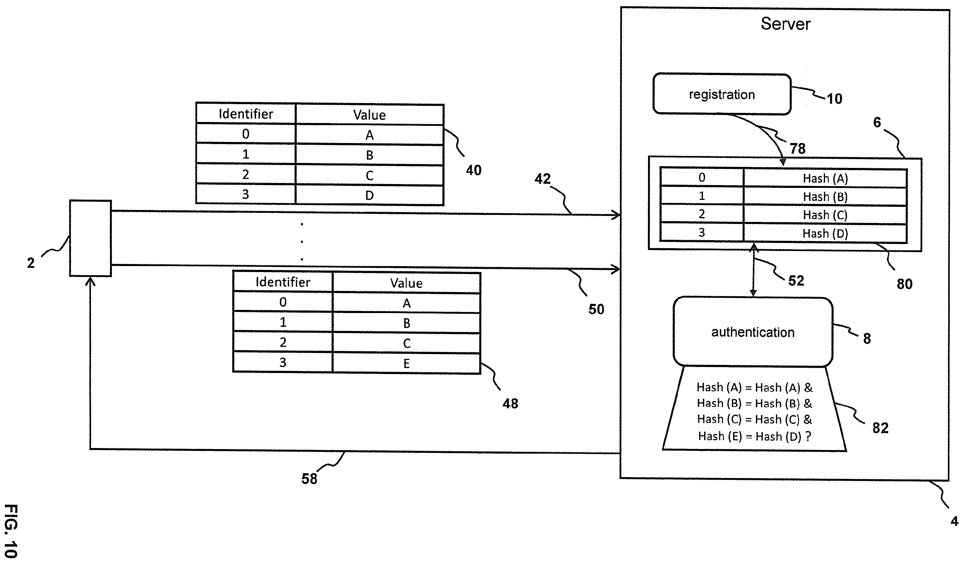

### Second implementation embodiment (FIG. 10): Separate hashed values

Different from the first implementation example, the values of the environmental factors are not merged, but kept and stored separately in the second implementation embodiment, each value linked to the respective identifier and the whole set of environmental factors linked to a user ID and/or terminal ID. Hence, in response to receiving the registration environmental authentication information 40, the server 4 forms a respective discrete registration authentication string for each individual authentication information included the received registration environmental authentication information 40 and stores each of the discrete registration authentication strings. More specifically, the server 4 hashes each of the values of registration environmental authentication information 40 received in the registration request 42 and separate hashed values 80 in the data base 6 (both activities of hashing and storing are indicated by arrow 78 in FIG. 10). The order of the environmental factors is not important, i.e. the data concerning the environmental factors are processed, stored and organized into a key-value schema, where the identifiers serve as keys for retrieving 52 the hashed values.

During the authentication phase, the terminal 2 sends the current environmental authentication information 48 (at least identifiers and values of the environmental factors) to the server 4 by authentication request 50. In response to receiving the current environmental authentication information, the server 4 again forms a respective discrete current authentication string for each individual authentication information included in the received current environmental authentication information 48 and compares 82 each of the current discrete authentication strings with the corresponding stored discrete registration authentication string. More specifically, the server hashes the received values by the same hashing algorithm employed during registration, retrieves 52 the registered hased values from the database 6 based on the identifiers received in the current environmental authentication information 48, and compares 82 sets of hashed values. Authentication is successful if all hash value pairs are equal. In the example of FIG. 10, the last hash value pair is not identical, authentication thus fails and the server 4 returns an authentication rejection 58.

Hence, the second implementation embodiment is an implementation which transforms environmental factor values to different individual hashed passwords. The second implementation embodiment also supports presence-condition control factors and value-condition control factors as described above with reference to FIGS. 4 and 5. As the individual environmental factors and their individual hash-values are stored separately at the server's database 6, server 4 is able to determine whether one or more environmental factors are defined as presence-condition control value in the database 6 and whether the defined environmental factors are present in the authentication request 50, as well as whether the value of a value-condition control factor included in the current environmental authentication information 48 is equal to the stored value of the registration environmental authentication information 40. Hence, the second implementation embodiment can be combined with the control factor mechanism of FIGS. 4 and 5.

In addition, the second implementation embodiment supports the progressive password using environmental factor number tolerance level as described above with reference to FIG. 7 and also the progressive password utilizing weight values as described above with reference to FIG. 8. Hence, in response to determining 68 that at least a given number of the current discrete authentication strings is identical to the corresponding stored discrete registration string in accordance with the environmental factor number tolerance level (FIG. 7) and/or in response to determining 69 that the weight value sum of the matching environmental factors meets the weight value sum threshold (FIG. 8), the server 4 authenticates the terminal 2. If the values of one or more environmental factors mismatch, but authentication is successful, i.e. the number of matching environmental factors are within the admissible range defined by the environmental factor number tolerance level and/or the weight value sum threshold is met, each mismatching hash of the current environmental authentication information 48 is stored as temporary hash value by the server 4 in the database 6. If the temporary hash value is validated during a given number of following authentications, the server 4 updates 70, 71 the old hash value with the new hash value that has been temporary so far.

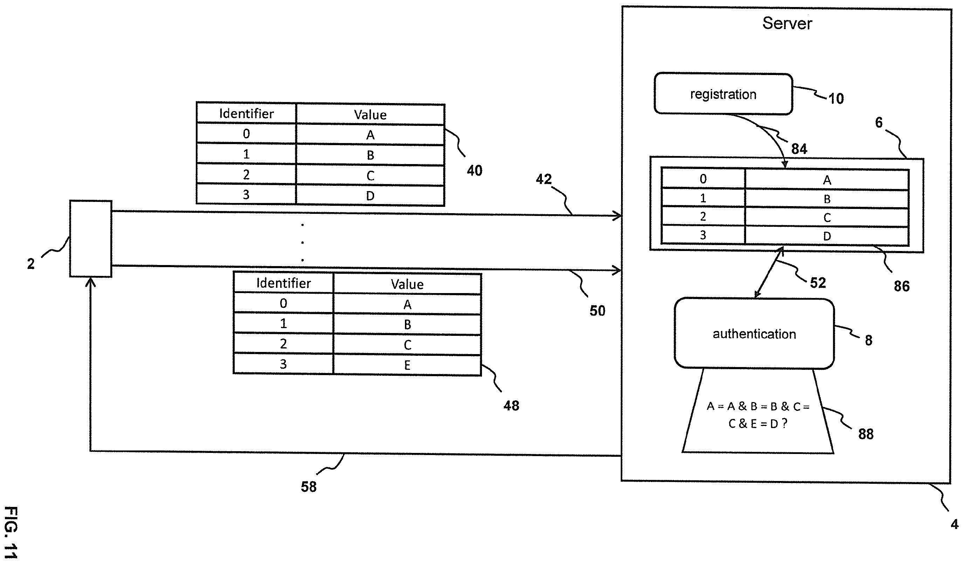

### Third implementation embodiment (FIG. 11): Unhashed strings

The third implementation emdodiment (FIG. 11) differs from the second implementation embodiment in that the values of the environmental factors are not hashed which facilitates quantative comparison 88 of stored value with current authentication values.

Hence, in the registration phase, in response to receiving the registration environmental authentication information 40, the server stores 84 the respective identifier and value of each of the multiple environmental factors included in the registration environmental authentication information 40. Optionally, the values are stored in an encrypted manner in the database 6.

At authentication time, in response to receiving the current environmental authentication information 48, the server compares 88 each of the values of the plurality of the selected set of multiple environmental factors included in the current environmental authentication information 48 with the corresponding stored values of the multiple environmental factors included in the registration environmental authentication information 86.

The third implementation embodiment also supports the control factor mechanisms as already described with respect to the second implementation embodiment as described above.

In addition, the second implementation embodiment supports the progressive password using value tolerance levels as described above with reference to FIG. 6 and/or environmental factor number tolerance level as described above with reference to FIG. 7 and/or the weight-value-based approach as described above with reference to FIG. 8. Hence, in response to determining 88 that at least a given number of the respective values of the plurality of the selected set of multiple environmental factors included in the current customized environmental authentication information 48 is substantially identical with the corresponding stored value of the selected set of multiple environmental factors included in the registration environmental authentication information 86, the server 4 authenticates the terminal 2.

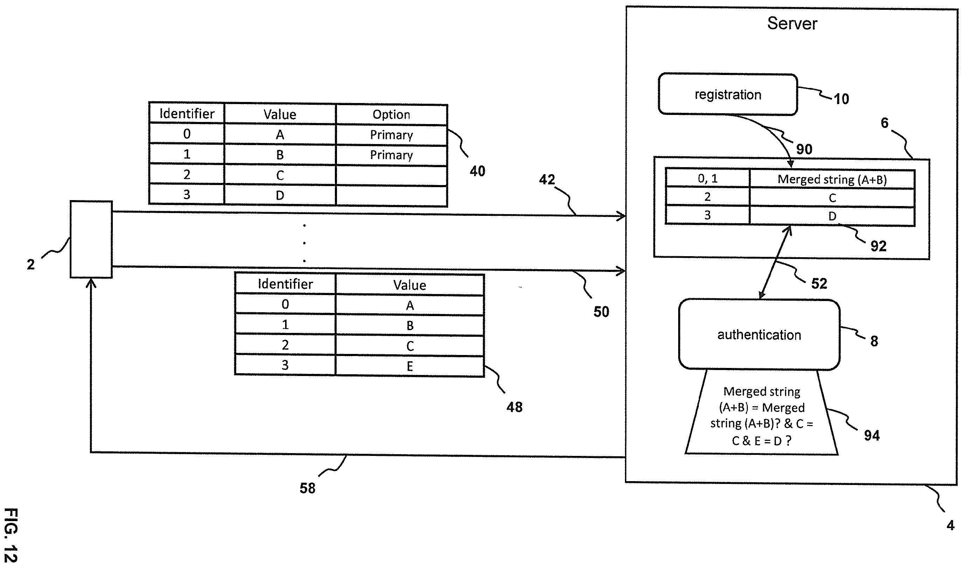

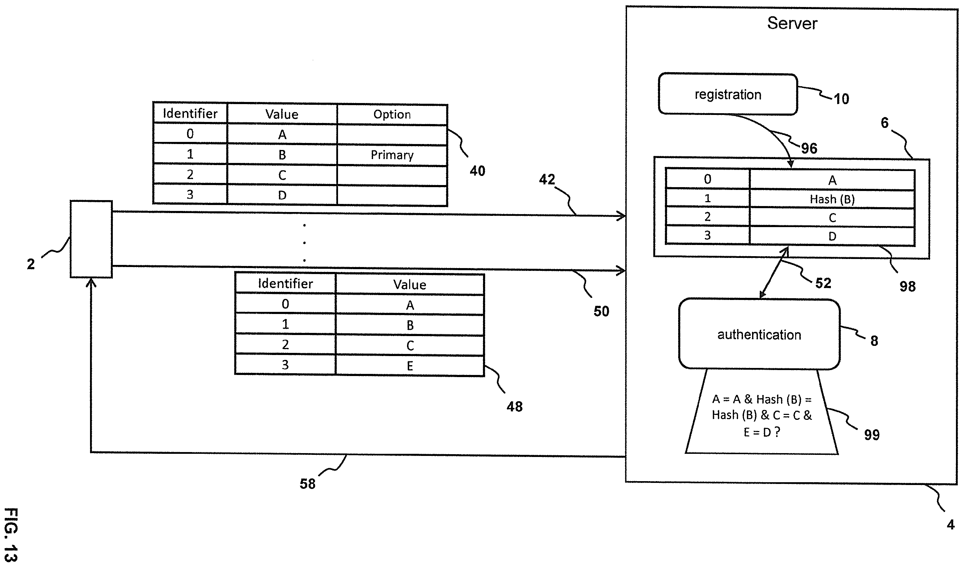

### Fourth implementation embodiment (FIGS. 12 and 13): Primary and secondary environmental factors

The fourth implementation embodiment is a mixture between the first implementation embodiment and the third implementation embodiment (FIG. 12) and/or between the second implementation embodiment and the third implementation embodiment (FIG. 13). At least one of the environmental factors is defined to be a primary environmental factor, while the other environmental factors are defined to be secondary factors. The values of the primary environmental factors are either merged according to the first implementation embodiment or hashed according to the second implementation embodiment as described above. The values of the secondary environmental factors are stored in an unhashed manner (in encrypted form in some emdodiments) in accordance with the third implementation embodiment as described above.

Hence, the registration environmental authentication information 40 comprises respective individual authentication information (values of the environmental factors) for at least two first of the multiple environmental factors, i.e. the primary environmental factors. The at least two first multiple environmental factors belong to the plurality of the selected set of multiple environmental factors as introduced above, i.e. they are subject to a later comparison by the server in order to authenticate the terminal. As shown by FIGS. 12 and 13, the registration environmental authentication information 40 may also include an indication which environmental factors are defined to be primary environmental factors (option: primary). In addition, the registration environmental authentication information 40 comprises the identifier and the value of at least one second of the multiple environmental factors, the one or more secondary environmental factors. The at least one second environmental factor also belongs to the plurality of the selected set of multiple environmental factors.

During the registration phase, in response to receiving the registration environmental authentication information 40, the server 4 merges the individual authentication information (values) for the at least two first multiple environmental factors included in the received registration environmental authentication information 40 to form a discrete registration authentication string as described above with reference to the first implementation embodiment. The server 4 stores the discrete registration authentication string (linked to the corresponding identifiers) and the identifier and the value of the at least secondary multiple environmental factor included in the received registration environmental authentication information 40, to form stored registration environmental authentication information 92. Merging and storing are visualized by arrow 90 in FIG. 12.

During the authentication phase, the current environmental authentication information 48 comprises again respective individual authentication information (values) for the at least two first environmental factors as well as the identifier and the value for the at least one second multiple environmental factor. In response to receiving the current environmental authentication information 48 with authentication request 50, the server again merges the individual authentication information for the at least two first multiple environmental factors included in the received current environmental authentication information 48 to form a discrete current authentication string. The server 4 then compares 94 the merged discrete current authentication string with the stored discrete registration authentication string retrieved 52 from the stored registration environmental authentication information 92 and the value of the at least second multiple environmental factor included in the received current environmental authentication information 48 with the corresponding stored value of the at least one second multiple environmental factor. In response to determining that the discrete current authentication string is identical to the stored discrete registration authentication string and that the value of the at least one second environmental factor included in the current environmental authentication information is substantially identical with the corresponding value of the at least one second environmental factor included in the registration environmental authentication information, the server 4 authenticates 58 the terminal 2.

FIG. 13 shows an example where the values of the primary environmental factors are not merged according to the first implementation embodiment, but hashed in accordance with the second implementation embodiment. Here, the registration environmental authentication information 40 comprises individual authentication information (value) for at least one first of the multiple environmental factor, the primary environmental factor, as well as an identifier and the value of at least one second of the multiple environmental factors, the one or more secondary environmental factors. The at least one first environmental factor and the at least one second environmental factor belong to the plurality of the selected set of multiple environmental factors.

During registration, in response to receiving the registration environmental authentication information 40, the server 4 forms a respective discrete registration authentication string (hash value) for each individual authentication information included in the received registration environmental authentication information 40 as already described above with reference to the second implementation embodiment. The server 4 stores the respective discrete registration authentication strings (linked to the identifier) and the identifier and the value of the at least one second multiple environmental factor included in the received registration environmental authentication information, to form stored registration environmental authentication information 98. Forming and storing are visualized by arrow 96 in FIG. 13.

At authentication time, the current environmental authentication information 48 comprises the identifiers and the values for the at least one first and for the at least one second multiple environmental factor. In response to receiving the current environmental authentication information 48 by authentication request 50, the server 4 formes a respective discrete current registration authentication string for each value included in the received current environmental authentication information 48, retrieves 52 the stored registration environmental authentication information 98 from the database 6 and compares 99 each current discrete authentication string (hash value) with the corresponding stored discrete registration authentication string (hash values) and the value of the at least one second multiple environmental factor included in the received current environmental authentication information 58 with the corresponding stored value of the at least one second multiple environmental factor. In response to determining that each discrete current authentication string is identical with the corresponding stored discrete registration authentication string and that the value of the at least one second environmental factor included in the current environmental authentication information is substantially identical with the corresponding value of the at least one second environmental factor included in the registration environmental authentication information 98, the server authenticates 58 the terminal 2.

The concept of progressive password is supported by the fourth implementation embodiments in a similar manner as by the first, second and third implementation embodiments already described above. With reference to FIGS. 12 and 13, an environmental factor number tolerance level and or using environmental factor number margin can be defined for the environmental authentication information and/or a tolerance level defining a range of admissible values for the values of secondary environmental factors can be defined. Comparison and potential update of the registered environmental authentication information 92 and 98 is performed as already described above with reference to FIGS. 6, 7 and 8.

In some examples, the selected set of multiple environmental factors include a classic password (string of characters) as one environmental factor. In these examples, the classic password environmental factor is defined as a primary environmental factor so that the classic password is either merged with one or more other values or one or more other primary environmental factors (FIG. 12) or hashed and stored as a hash value (FIG. 13).

The fourth implementation embodiment also supports the control factor mechanisms as already described with respect to the second and third implementation embodiment as described above.

### Miscellaneous

The registration request 42, a potential registration confirmation or rejection, authentication request 50 and authentication response 58 as well as any other messages exchanged between the terminal 2 and the server 4 may be implemented any sort of suitable communication and network procotols. For example, the messages may be application packets transmitted by using the TCP/IP Internet protocol suite including packets according to protocols like HTTP or HTTPS or webservice message e.g. on the basis of SOAP, REST and others like Email or SMS/MMS. At the lower layers, the communication interface between the terminal 2 and the server 4 may be realized by various communication standards, for example by wired technologies such as Ethernet or ATM or by wireless/mobile networks such as 2G/3G/4G or WiFi (IEEE 802.11). If the server 4 is located locally at the terminal 2, any adequate communication mechanisms may be employed including TCP/IP-based messages, inter-process communication, remote procedure calls etc.

The server 4 may employ any suitable cryptographic mechanisms to securely store the registration environmental authentication information as well as temporary hash values or unhashed values implementing the progressive password concept, including symmetric encryption operation. Communication between the terminal 2 and the server 4 may be encrypted as well e.g. by using asymmetric encryption mechanisms. In addition, the requests from the terminal 2 and the responses from the server 4 may be digitally signed by a digital signature in order to ensure authenticity of the messages.

Hashing employed by the server 4 may be based on suitable hashing functions such as MD5, Secure Hash Algorithm (SHA), Password-Based Key Derivation Function 2 (PBKDF2) or others.

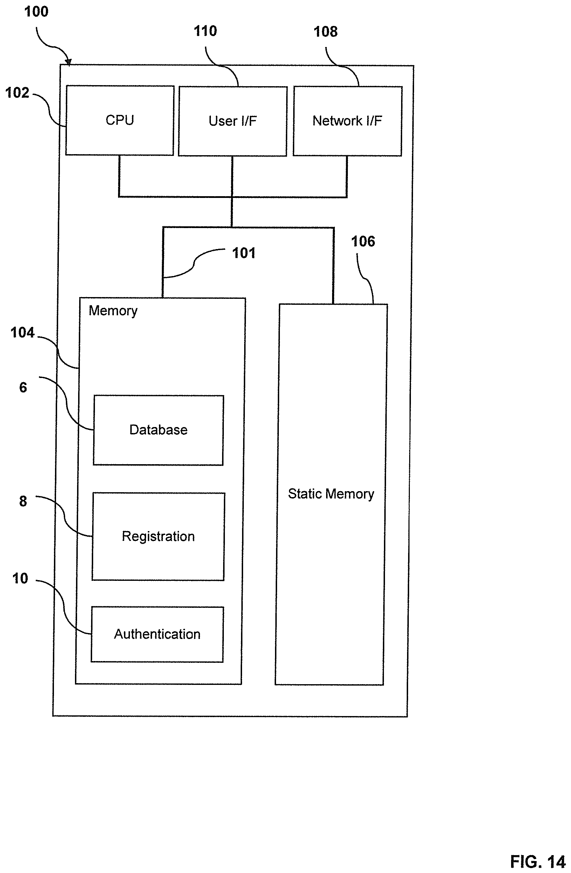

Finally, FIG. 14 is a diagrammatic example representation of a computer system 100 arranged as a terminal and/or as a server to execute a set of instructions, to cause the computer system 100 to perform any of the methodologies implementing the generation and registration of an environmental password as well as the authentication utilizing the environmental password as described above. The computer system 100 includes a processor 102, a main memory 104 and a network interface 108 which communicate with each other via a bus 101. The computer system 100 further includes a static memory 106, e.g. non-removable flash and/or solid state drive and/or a removable Micro or Mini SD card, which permanently stores the instructions enabling the computer system 100 to execute its functions, such as registration module 8 and authentication module 10, and/or the data including the environmental authentication information in the database 6. Furthermore, the computer system 100 may include a user interface 110 supported by a corresponding user interface control module.

In some examples, the instructions programmed to carry out the routines to generate an environmental password and authenticate the terminal are also stored on the static memory 106. When the instructions are executed, process data resides in the main memory 104 and/or the processor 102. The instructions may further be transmitted or received as a propagated signal through the network interface device 108 from/to a software server within a local area network or the Internet. The network interface device 108 may be a wireless network interface (such as a Wi-Fi and/or Bluetooth interface) and/or a 2G/3G/4G/5G mobile network interface.

The environmental password mechanisms described herein are an improved authentication concept improving information technology security and usability by basing authentication information on dynamic environmental factors. The authentication can by employed for multiple practical applications, such as local login on the terminal, login to remote servers offered by servers such as Email, password-protected web portal, webservices, etc.

Although certain products and methods constructed in accordance with the teachings of the invention have been described herein, the scope of coverage of this patent is not limited thereto.

On the contrary, this patent covers all embodiments of the teachings of the invention fairly falling within the scope of the appended claims either literally or under the doctrine of equivalents.

## Claims

1. A method for authenticating a terminal with a server based on a selected set of multiple environmental factors, wherein each of the multiple environmental factors relates to a configurable characteristic of the terminal, wherein each of the multiple environmental factors is defined at least by an identifier and a value, wherein the identifier identifies a respective environmental factor and the value indicates a state of the respective configurable characteristic, wherein the selected set of multiple environmental factors constitute a customized environmental authentication information for authenticating the terminal with the server,
wherein the method comprises the following steps performed by the terminal:
registering, at a first point of time, a registration environmental authentication information of the terminal, comprising:
- extracting, for each of the selected set of multiple environmental factors, the respective state of the related configurable characteristic of the terminal at the first point of time and setting the respective value of each of the multiple environmental factors depending on the respective state at the first point of time (12);
- generating the registration environmental authentication information based on the values of the multiple environmental factors set at the first point of time (14), wherein the registration environmental authentication information comprises the respective identifier and value of each of the multiple environmental factors;
- sending the registration environmental authentication information to the server for storing the registration environmental authentication information (16);
authenticating the terminal with the server at a second point of time later than the first point of time, comprising:
- extracting, for each of a subset of the selected set of multiple environmental factors, the subset comprising a plurality of the multiple environmental factors and being prescribed by a policy, the respective state of the related configurable characteristic of the terminal at the second point of time and setting the respective value of each of the subset of multiple environmental factors depending on the respective state at the second point of time (22);
- generating a current environmental authentication information based on the values of the multiple environmental factors set at the second point of time (24), wherein the current environmental authentication information comprises the respective identifier and value for each of a plurality of the multiple environmental factors;
- sending the current environmental authentication information to the server for authenticating the terminal with the server (26);
- receiving an authentication confirmation message from the server,
wherein the method further comprises the following steps performed by the server:
registering, at the first point of time, the registration environmental authentication information of the terminal, comprising:
- receiving the registration environmental authentication information from the terminal (18);
- in response to receiving the registration environmental authentication information, storing the registration environmental authentication information (20), comprising storing the respective identifier and value of each of the multiple environmental factors included in the registration environmental authentication information;
authenticating the terminal at the second point of time later than the first point of time, comprising:
- receiving the current environmental authentication information from the terminal (28);
- in response to receiving the current environmental authentication information, comparing the received current environmental authentication information with the stored registration environmental authentication information (30), comprising comparing each of the values of the plurality of the multiple environmental factors included in the current environmental authentication information with the corresponding stored value of the multiple environmental factors included in the registration environmental authentication information;
- in response to determining that the current environmental authentication information is substantially identical to the registration environmental authentication information, authenticating the terminal (32) by returning the authentication confirmation message to the terminal, wherein the determining comprises determining that at least a given number of the respective values of the plurality of the multiple environmental factors included in the current environmental authentication information is substantially identical with the corresponding stored value of the multiple environmental factors included in the registration environmental authentication information,
wherein at least one of the multiple environmental factor is additionally defined by a tolerance level defining a range of admissible values of the at least one environmental factor, wherein the registration environmental authentication information comprises the tolerance level, and wherein the server determines that the value of the at least one environmental factor included in the current environmental authentication information is substantially identical to the corresponding stored value of the at least one environmental factor included in the registration environmental authentication information in response to determining that the value of the at least one environmental factor included in the current environmental authentication information is within the range of admissible values defined by the tolerance level,
wherein the method further comprises the following step performed by the server:
- storing the value of the at least one environmental factor included in the current environmental authentication information to form a history of values of the at least one environmental factor in past authentications;
- updating the value of the at least one environmental factor included in the stored registration environmental authentication information with the value of the at least one environmental factor included in the current environmental authentication information in response to determining based on the value of the at least one environmental factor included in the current environmental authentication information and on the values of the at least one environmental factor stored in the history of values of the at least one environmental factor in past authentications that, for a given number of times, the value of the at least one environmental factor is within the range of admissible values defined by the tolerance level, but not identical to the value of the at least one environmental factor included in the stored registration environmental authentication information.

2. The method according to claim 1, wherein the configurable characteristics of the terminal include one or more of a storage content of the terminal, software processes currently running on the terminal, software programs installed on the terminal, an operating system of the terminal, a current state of a web browser application currently executed by the terminal, one or more aspects of a current system configuration of the terminal in particular a screen luminosity, a system volume, and a display resolution, a connection to an external storage drive, one or more currently opened files, and a user input, in particular a password set by the user, a fingerprint, or one or more gestures input by the user via the terminal.

3. The method according to claim 1 or claim 2, wherein at least one of the multiple environmental factors is defined as a control factor when registering the registration environmental authentication information, wherein the at least one control factor determines conditions for applying other environmental factors of the multiple environmental factors when authenticating the terminal with the server.

4. The method according to claim 3, wherein the at least one control factor is defined as a presence-condition factor when registering the registration environmental authentication information, wherein an absence or a presence of the presence-condition factor in the current authentication information determines which environmental factors of the multiple environmental factors form the plurality of the multiple environmental factors when authenticating the terminal with the server.

5. The method according to 3, wherein the at least one control factor is defined as a value-condition factor when registering the registration environmental authentication information, wherein the value of the value-condition factor included in the current authentication information determines which environmental factors of the multiple environmental factors form the plurality of the multiple environmental factors when authenticating the terminal with the server.

6. A system (1) for authentication a terminal (2) with a server (4) based on a selected set of multiple environmental factors, wherein each of the multiple environmental factors relates to configurable characteristic of the terminal (2), wherein each of the multiple environmental factors is defined at least by an identifier and a value, wherein the identifier identifies a respective environmental factor and the value indicates a state of the respective configurable characteristic, wherein the selected set of multiple environmental factors constitute an customized environmental authentication information for authenticating the terminal (2) with the server, wherein the system (1) comprises:
the terminal (2) connected to the server (4) by a communication interface and arranged to:
register, at a first point of time, a registration environmental authentication information of the terminal (2), by:
- extracting, for each of the selected set of multiple environmental factors, the respective state of the related configurable characteristic of the terminal (2) at the first point of time and setting the respective value of each of the multiple environmental factors depending on the respective state at the first point of time;
- generating the registration environmental authentication information based on the values of the multiple environmental factors set at the first point of time, wherein the registration environmental authentication information comprises the respective identifier and value of each of the multiple environmental factors;
- sending the registration environmental authentication information to the server (4) for storing the first environmental authentication information;
authenticate the terminal (2) with the server at a second point of time later than the first point of time, by:
- extracting, for each of a subset of the selected set of multiple environmental factors, the subset comprising a plurality of the multiple environmental factors and being prescribed by a policy, the respective state of the related configurable characteristic of the terminal (2) at the second point of time and setting the respective value of each of the subset of multiple environmental factors depending on the respective state at the second point of time;
- generating a current environmental authentication information based on the values of the multiple environmental factors set at the second point of time, wherein the current environmental authentication information comprises the respective identifier and value for each of a plurality of the multiple environmental factors;
- sending the current environmental authentication information to the server (4) for authenticating the terminal with the server (4);
- receiving an authentication confirmation message from the server (4), the server (4) arranged to:
register, at the first point of time, the registration environmental authentication information of the terminal (2), by:
- receiving the registration environmental authentication information from the terminal (2);
- in response to receiving the registration environmental authentication information, storing the registration environmental authentication information, comprising storing the respective identifier and value of each of the multiple environmental factors included in the registration environmental authentication information;
authenticate the terminal (2) at the second point of time later than the first point of time, by:
- receiving the current environmental authentication information from the terminal (2);
- in response to receiving the current environmental authentication information, comparing the received current environmental authentication information with the stored registration environmental authentication information, comprising comparing each of the values of the plurality of the multiple environmental factors included in the current environmental authentication information with the corresponding stored value of the multiple environmental factors included in the registration environmental authentication information;
- in response to determining that the current environmental authentication information is substantially identical to the registration environmental authentication information, authenticating the terminal (2) by returning the authentication confirmation message to the terminal (2), wherein the determining comprises determining that at least a given number of the respective values of the plurality of the multiple environmental factors included in the current environmental authentication information is substantially identical with the corresponding stored value of the multiple environmental factors included in the registration environmental authentication information,
wherein at least one of the multiple environmental factor is additionally defined by a tolerance level defining a range of admissible values of the at least one environmental factor, wherein the registration environmental authentication information comprises the tolerance level, and wherein the server (4) is arranged to determine that the value of the at least one environmental factor included in the current environmental authentication information is substantially identical to the corresponding stored value of the at least one environmental factor included in the registration environmental authentication information in response to determining that the value of the at least one environmental factor included in the current environmental authentication information is within the range of admissible values defined by the tolerance level,
wherein the server (4) is further arranged to:
- store the value of the at least one environmental factor included in the current environmental authentication information to form a history of values of the at least one environmental factor in past authentications;
- update the value of the at least one environmental factor included in the stored registration environmental authentication information with the value of the at least one environmental factor included in the current environmental authentication information in response to determining based on the value of the at least one environmental factor included in the current environmental authentication information and on the values of the at least one environmental factor stored in the history of values of the at least one environmental factor in past authentications that, for a given number of times, the value of the at least one environmental factor is within the range of admissible values defined by the tolerance level, but not identical to the value of the at least one environmental factor included in the stored registration environmental authentication information.

7. The system (1) according to claim 6, wherein the configurable characteristics of the terminal (2) include one or more of a storage content of the terminal (2), software processes currently running on the terminal (2), software programs installed on the terminal (2), an operating system of the terminal (2), a current state of a web browser application currently executed by the terminal (2), one or more aspects of a current system configuration of the terminal (2) in particular a screen luminosity, a system volume, and a display resolution, a connection to an external storage drive, one or more currently opened files, and a user input, in particular a password set by the user, a fingerprint, or one or more gestures input by the user via the terminal (2).

8. The system (1) according to claim 6 or claim 7, wherein at least one of the multiple environmental factors is defined as a control factor when registering the registration environmental authentication information, wherein the at least one control factor determines conditions for applying other environmental factors of the multiple environmental factors when authenticating the terminal (2) with the server (4).

9. The system (1) according to claim 8, wherein the at least one control factor is defined as a presence-condition factor when registering the registration environmental authentication information, wherein an absence or a presence of the presence-condition factor in the current authentication information determines which environmental factors of the multiple environmental factors form the plurality of the multiple environmental factors when authenticating the terminal (2) with the server (4).

10. The system (1) according to 8, wherein the at least one control factor is defined as a value-condition factor when registering the registration environmental authentication information, wherein the value of the value-condition factor included in the current authentication information determines which environmental factors of the multiple environmental factors form the plurality of the multiple environmental factors when authenticating the terminal (2) with the server (4).

## Patentansprüche

1. Verfahren zum Authentifizieren eines Endgeräts mit einem Server auf der Grundlage eines gewählten Satzes von mehreren Umgebungsfaktoren, wobei sich jeder der mehreren Umgebungsfaktoren auf ein konfigurierbares Merkmal des Endgeräts bezieht, wobei jeder der mehreren Umgebungsfaktoren mindestens durch einen Bezeichner und einen Wert definiert ist, wobei der Bezeichner einen jeweiligen Umgebungsfaktor identifiziert und der Wert einen Zustand des jeweiligen konfigurierbaren Merkmals angibt, wobei der gewählte Satz von mehreren Umgebungsfaktoren eine individualisierte Umgebungsauthentifizierungsinformation zum Authentifizieren des Endgeräts mit dem Server bildet,
wobei das Verfahren die folgenden Schritte umfasst, die durch das Endgerät ausgeführt werden:
Registrieren einer Registrierungs-Umgebungsauthentifizierungsinformation des Endgeräts zu einem ersten Zeitpunkt, umfassend:
- Extrahieren des jeweiligen Zustands des zugehörigen konfigurierbaren Merkmals des Endgeräts zu dem ersten Zeitpunkt für jeden des gewählten Satzes von mehreren Umgebungsfaktoren und Festlegen des jeweiligen Werts jedes der mehreren Umgebungsfaktoren in Abhängigkeit von dem jeweiligen Zustand zu dem ersten Zeitpunkt (12);
- Erzeugen der Registrierungs-Umgebungsauthentifizierungsinformation auf der Grundlage der Werte der mehreren Umgebungsfaktoren, die zum ersten Zeitpunkt (14) festgelegt sind, wobei die Registrierungs-Umgebungsauthentifizierungsinformation den jeweiligen Bezeichner und Wert jedes der mehreren Umgebungsfaktoren umfasst;
- Senden der Registrierungs-Umgebungsauthentifizierungsinformation an den Server zum Speichern der Registrierungs-Umgebungsauthentifizierungsinformation (16);
Authentifizieren des Endgeräts mit dem Server zu einem zweiten Zeitpunkt, der später als der erste Zeitpunkt ist, umfassend:
- Extrahieren des jeweiligen Zustands des zugehörigen konfigurierbaren Merkmals des Endgeräts zu dem zweiten Zeitpunkt für jeden einer Teilmenge des gewählten Satzes mehrerer Umgebungsfaktoren, wobei die Teilmenge eine Mehrzahl der mehreren Umgebungsfaktoren umfasst und durch eine Richtlinie vorgeschrieben wird, und Festlegen des jeweiligen Werts jedes der Teilmenge mehrerer Umgebungsfaktoren in Abhängigkeit von dem jeweiligen Zustand zu dem zweiten Zeitpunkt (22);
- Erzeugen einer aktuellen Umgebungsauthentifizierungsinformation auf der Grundlage der Werte der mehreren Umgebungsfaktoren, die zu dem zweiten Zeitpunkt (24) festgelegt sind, wobei die aktuelle Umgebungsauthentifizierungsinformation den jeweiligen Bezeichner und Wert für jeden einer Mehrzahl der mehreren Umgebungsfaktoren umfasst;
- Senden der aktuellen Umgebungsauthentifizierungsinformation an den Server zum Authentifizieren des Endgeräts mit dem Server (26);
- Empfangen einer Authentifizierungsbestätigungsnachricht von dem Server,
wobei das Verfahren weiterhin die folgenden Schritte umfasst, die durch den Server ausgeführt werden:
Registrieren der Registrierungs-Umgebungsauthentifizierungsinformation des Endgeräts zu dem ersten Zeitpunkt, umfassend:
- Empfangen der Registrierungs-Umgebungsauthentifizierungsinformation von dem Endgerät (18);
- als Reaktion auf Empfangen der Registrierungs-Umgebungsauthentifizierungsinformation, Speichern der Registrierungs-Umgebungsauthentifizierungsinformation (20), umfassend Speichern des jeweiligen Bezeichners und Wertes jedes der mehreren Umgebungsfaktoren, die in der Registrierungs-Umgebungsauthentifizierungsinformation enthalten sind;
Authentifizieren des Endgeräts zu dem zweiten Zeitpunkt, der später als der erste Zeitpunkt ist, umfassend:
- Empfangen der aktuellen Umgebungsauthentifizierungsinformation von dem Endgerät (28);
- als Reaktion auf Empfangen der aktuellen Umgebungsauthentifizierungsinformation, Vergleichen der empfangenen aktuellen Umgebungsauthentifizierungsinformation mit der gespeicherten Registrierungs-Umgebungsauthentifizierungsinformation (30), umfassend Vergleichen jedes der Werte der Mehrzahl der mehreren Umgebungsfaktoren, die in der aktuellen Umgebungsauthentifizierungsinformation enthalten sind, mit dem entsprechenden gespeicherten Wert der mehreren Umgebungsfaktoren, die in der Registrierungs-Umgebungsauthentifizierungsinformation enthalten sind;
- als Reaktion auf Bestimmen, dass die aktuelle Umgebungsauthentifizierungsinformation im Wesentlichen identisch mit der Registrierungs-Umgebungsauthentifizierungsinformation ist, Authentifizieren des Endgeräts (32) durch Zurücksenden der Authentifizierungsbestätigungsnachricht an das Endgerät, wobei das Bestimmen Bestimmen umfasst, dass mindestens eine gegebene Anzahl der jeweiligen Werte der Mehrzahl der mehreren Umgebungsfaktoren, die in der aktuellen Umgebungsauthentifizierungsinformation enthalten sind, im Wesentlichen identisch mit dem entsprechenden gespeicherten Wert der mehreren Umgebungsfaktoren ist, die in der Registrierungs-Umgebungsauthentifizierungsinformation enthalten sind,
wobei mindestens einer der mehreren Umgebungsfaktoren zusätzlich durch ein Toleranzniveau definiert ist, das einen Bereich zulässiger Werte des mindestens einen Umgebungsfaktors definiert, wobei die Registrierungs-Umgebungsauthentifizierungsinformation das Toleranzniveau umfasst, und wobei der Server bestimmt, dass der Wert des mindestens einen Umgebungsfaktors, der in der aktuellen Umgebungsauthentifizierungsinformation enthalten ist, im Wesentlichen identisch mit dem entsprechenden gespeicherten Wert des mindestens einen Umgebungsfaktors ist, der in der Registrierungs-Umgebungsauthentifizierungsinformation enthalten ist, in Reaktion auf Bestimmen, dass der Wert des mindestens einen Umgebungsfaktors, der in der aktuellen Umgebungsauthentifizierungsinformation enthalten ist, innerhalb des Bereichs zulässiger Werte liegt, der durch das Toleranzniveau definiert ist,
wobei das Verfahren weiterhin den folgenden Schritt umfasst, der durch den Server ausgeführt wird:
- Speichern des Wertes des mindestens einen Umgebungsfaktors, der in der aktuellen Umgebungsauthentifizierungsinformation enthalten ist, um eine Historie der Werte des mindestens einen Umgebungsfaktors in vergangenen Authentifizierungen zu bilden;
- Aktualisieren des Wertes des mindestens einen Umgebungsfaktors, der in der gespeicherten Registrierungs-Umgebungsauthentifizierungsinformation enthalten ist, mit dem Wert des mindestens einen Umgebungsfaktors, der in der aktuellen UmgebungsAuthentifizierungsinformation enthalten ist, als Reaktion auf Bestimmen, auf der Grundlage des Wertes des mindestens einen Umgebungsfaktors, der in der aktuellen Umgebungsauthentifizierungsinformation enthalten ist, und auf den Werten des mindestens einen Umgebungsfaktors, die in der Historie von Werten des mindestens einen Umgebungsfaktors in vergangenen Authentifizierungen gespeichert sind, dass, für eine gegebene Anzahl von Malen der Wert des mindestens einen Umgebungsfaktors innerhalb des Bereichs zulässiger Werte liegt, der durch das Toleranzniveau definiert ist, aber nicht identisch mit dem Wert des mindestens einen Umgebungsfaktors ist, der in der gespeicherten Registrierungs-Umgebungsauthentifizierungsinformation enthalten ist.

2. Verfahren nach Anspruch 1, wobei die konfigurierbaren Merkmale des Endgeräts einen Speicherinhalt des Endgeräts, aktuell auf dem Endgerät laufende Softwareprozesse, auf dem Endgerät installierte Softwareprogramme, ein Betriebssystem des Endgeräts, einen aktuellen Zustand einer aktuell vom Endgerät ausgeführten Webbrowser-Anwendung, einen oder mehrere Aspekte einer aktuellen Systemkonfiguration des Endgeräts, insbesondere eine Bildschirmhelligkeit, eine Systemlautstärke und eine Anzeigeauflösung, eine Verbindung zu einem externen Speicherlaufwerk, eine oder mehrere aktuell geöffnete Dateien und eine Benutzereingabe, insbesondere ein vom Benutzer festgelegtes Passwort, einen Fingerabdruck und/oder eine oder mehrere vom Benutzer über das Endgerät eingegebene Gesten enthalten.

3. Verfahren nach Anspruch 1 oder Anspruch 2, wobei mindestens einer der mehreren Umgebungsfaktoren beim Registrieren der Registrierungs-Umgebungsauthentifizierungsinformation als ein Kontrollfaktor definiert wird, wobei der mindestens eine Kontrollfaktor Bedingungen zum Anwenden anderer Umgebungsfaktoren der mehreren Umgebungsfaktoren bestimmt, wenn das Endgerät mit dem Server authentifiziert wird.

4. Verfahren nach Anspruch 3, wobei der mindestens eine Kontrollfaktor beim Registrieren der Registrierungs-Umgebungsauthentifizierungsinformation als ein Anwesenheitsbedingungsfaktor definiert wird, wobei ein Fehlen oder ein Vorhandensein des Anwesenheitsbedingungsfaktors in der aktuellen Authentifizierungsinformation bestimmt, welche Umgebungsfaktoren der mehreren Umgebungsfaktoren die Mehrzahl der mehreren Umgebungsfaktoren bilden, wenn das Endgerät mit dem Server authentifiziert wird.

5. Verfahren nach 3, wobei der mindestens eine Kontrollfaktor als ein Wertbedingungsfaktor beim Registrieren der Registrierungs-Umgebungsauthentifizierungsinformation definiert wird, wobei der Wert des Wertbedingungsfaktors, der in der aktuellen Authentifizierungsinformation enthalten ist, bestimmt, welche Umgebungsfaktoren der mehreren Umgebungsfaktoren die Mehrzahl der mehreren Umgebungsfaktoren bilden, wenn das Endgerät mit dem Server authentifiziert wird.

6. System (1) zum Authentifizieren eines Endgeräts (2) mit einem Server (4) auf der Grundlage eines gewählten Satzes von mehrerer Umgebungsfaktoren, wobei sich jeder der mehreren Umgebungsfaktoren auf ein konfigurierbares Merkmal des Endgeräts (2) bezieht, wobei jeder der mehreren Umgebungsfaktoren mindestens durch einen Bezeichner und einen Wert definiert ist, wobei der Bezeichner einen jeweiligen Umgebungsfaktor identifiziert und der Wert einen Zustand des jeweiligen konfigurierbaren Merkmals angibt, wobei der gewählte Satz von mehreren Umgebungsfaktoren eine individualisierte Umgebungsauthentifizierungsinformation zum Authentifizieren des Endgeräts (2) mit dem Server bildet, wobei das System (1) umfasst:
das Endgerät (2), das über eine Kommunikationsschnittstelle mit dem Server (4) verbunden ist und dazu eingerichtet ist:
zu einem ersten Zeitpunkt eine Registrierungs-Umgebungsauthentifizierungsinformation des Endgeräts (2) zu registrieren, durch:
- Extrahieren des jeweiligen Zustands des zugehörigen konfigurierbaren Merkmals des Endgeräts (2) zu dem ersten Zeitpunkt für jeden des gewählten Satzes von mehreren Umgebungsfaktoren und Festlegen des jeweiligen Werts jedes der mehreren Umgebungsfaktoren in Abhängigkeit von dem jeweiligen Zustand zu dem ersten Zeitpunkt;
- Erzeugen der Registrierungs-Umgebungsauthentifizierungsinformation auf der Grundlage der Werte der mehreren Umgebungsfaktoren, die zum ersten Zeitpunkt festgelegt sind, wobei die Registrierungs-Umgebungsauthentifizierungsinformation den jeweiligen Bezeichner und Wert jedes der mehreren Umgebungsfaktoren umfasst;
- Senden der Registrierungs-Umgebungsauthentifizierungsinformation an den Server (4) zum Speichern der Registrierungs-Umgebungsauthentifizierungsinformation;
zu einem zweiten Zeitpunkt, der später als der erste Zeitpunkt ist, das Endgerät (2) mit dem Server zu authentifizieren, durch:
- Extrahieren des jeweiligen Zustands des zugehörigen konfigurierbaren Merkmals des Endgeräts (2) zu dem zweiten Zeitpunkt für jeden einer Teilmenge des gewählten Satzes mehrerer Umgebungsfaktoren, wobei die Teilmenge eine Mehrzahl der mehreren Umgebungsfaktoren umfasst und durch eine Richtlinie vorgeschrieben wird, und Festlegen des jeweiligen Werts jedes der Teilmenge mehrerer Umgebungsfaktoren in Abhängigkeit von dem jeweiligen Zustand zu dem zweiten Zeitpunkt;
- Erzeugen einer aktuellen Umgebungsauthentifizierungsinformation auf der Grundlage der Werte der mehreren Umgebungsfaktoren, die zu dem zweiten Zeitpunkt festgelegt sind, wobei die aktuelle Umgebungsauthentifizierungsinformation den jeweiligen Bezeichner und Wert für jeden einer Mehrzahl der mehreren Umgebungsfaktoren umfasst;
- Senden der aktuellen Umgebungsauthentifizierungsinformation an den Server (4) zum Authentifizieren des Endgeräts mit dem Server (4);
- Empfangen einer Authentifizierungsbestätigungsnachricht von dem Server (4), den Server (4), der dazu eingerichtet ist:
zu dem ersten Zeitpunkt die Registrierungs-Umgebungsauthentifizierungsinformation von dem Endgerät (2) zu registrieren, durch:
- Empfangen der Registrierungs-Umgebungsauthentifizierungsinformation von dem Endgerät (2);
- als Reaktion auf Empfangen der Registrierungs-Umgebungsauthentifizierungsinformation, Speichern der Registrierungs-Umgebungsauthentifizierungsinformation (20), umfassend Speichern des jeweiligen Bezeichners und Wertes jedes der mehreren Umgebungsfaktoren, die in der Registrierungs-Umgebungsauthentifizierungsinformation enthalten sind;
zu dem zweiten Zeitpunkt, der später als der erste Zeitpunkt ist, das Endgerät (2) zu authentifizieren, durch:
- Empfangen der aktuellen Umgebungsauthentifizierungsinformation von dem Endgerät (2);
- als Reaktion auf Empfangen der aktuellen Umgebungsauthentifizierungsinformation, Vergleichen der empfangenen aktuellen Umgebungsauthentifizierungsinformation mit der gespeicherten Registrierungs-Umgebungsauthentifizierungsinformation, umfassend Vergleichen jedes der Werte der Mehrzahl der mehreren Umgebungsfaktoren, die in der aktuellen Umgebungsauthentifizierungsinformation enthalten sind, mit dem entsprechenden gespeicherten Wert der mehreren Umgebungsfaktoren, die in der Registrierungs-Umgebungsauthentifizierungsinformation enthalten sind;
- als Reaktion auf Bestimmen, dass die aktuelle Umgebungsauthentifizierungsinformation im Wesentlichen identisch mit der Registrierungs-Umgebungsauthentifizierungsinformation ist, Authentifizieren des Endgeräts (2) durch Zurücksenden der Authentifizierungsbestätigungsnachricht an das Endgerät (2), wobei das Bestimmen Bestimmen umfasst, dass mindestens eine gegebene Anzahl der jeweiligen Werte der Mehrzahl der mehreren Umgebungsfaktoren, die in der aktuellen Umgebungsauthentifizierungsinformation enthalten sind, im Wesentlichen identisch mit dem entsprechenden gespeicherten Wert der mehreren Umgebungsfaktoren ist, die in der Registrierungs-Umgebungsauthentifizierungsinformation enthalten sind,
wobei mindestens einer der mehreren Umgebungsfaktoren zusätzlich durch ein Toleranzniveau definiert ist, das einen Bereich zulässiger Werte des mindestens einen Umgebungsfaktors definiert, wobei die Registrierungs-Umgebungsauthentifizierungsinformation das Toleranzniveau umfasst, und wobei der Server (4) bestimmt, dass der Wert des mindestens einen Umgebungsfaktors, der in der aktuellen Umgebungsauthentifizierungsinformation enthalten ist, im Wesentlichen identisch mit dem entsprechenden gespeicherten Wert des mindestens einen Umgebungsfaktors ist, der in der Registrierungs-Umgebungsauthentifizierungsinformation enthalten ist, in Reaktion auf Bestimmen, dass der Wert des mindestens einen Umgebungsfaktors, der in der aktuellen Umgebungsauthentifizierungsinformation enthalten ist, innerhalb des Bereichs zulässiger Werte liegt, der durch das Toleranzniveau definiert ist,
wobei der Server (4) weiterhin dazu eingerichtet ist:
- den Wert des mindestens einen Umgebungsfaktors, der in der aktuellen Umgebungsauthentifizierungsinformation enthalten ist, zu speichern, um eine Historie der Werte des mindestens einen Umgebungsfaktors in vergangenen Authentifizierungen zu bilden;
- den Wert des mindestens einen Umgebungsfaktors, der in der gespeicherten Registrierungs-Umgebungsauthentifizierungsinformation enthalten ist, mit dem Wert des mindestens einen Umgebungsfaktors, der in der aktuellen UmgebungsAuthentifizierungsinformation enthalten ist, zu aktualisieren, als Reaktion auf Bestimmen, auf der Grundlage des Wertes des mindestens einen Umgebungsfaktors, der in der aktuellen Umgebungsauthentifizierungsinformation enthalten ist, und auf den Werten des mindestens einen Umgebungsfaktors, die in der Historie von Werten des mindestens einen Umgebungsfaktors in vergangenen Authentifizierungen gespeichert sind, dass, für eine gegebene Anzahl von Malen der Wert des mindestens einen Umgebungsfaktors innerhalb des Bereichs zulässiger Werte liegt, der durch das Toleranzniveau definiert ist, aber nicht identisch mit dem Wert des mindestens einen Umgebungsfaktors ist, der in der gespeicherten Registrierungs-Umgebungsauthentifizierungsinformation enthalten ist.

7. System (1) nach Anspruch 6, wobei die konfigurierbaren Merkmale des Endgeräts (2) einen Speicherinhalt des Endgeräts (2), aktuell auf dem Endgerät (2) laufende Softwareprozesse, auf dem Endgerät (2) installierte Softwareprogramme, ein Betriebssystem des Endgeräts (2), einen aktuellen Zustand einer aktuell vom Endgerät (2) ausgeführten Webbrowser-Anwendung, einen oder mehrere Aspekte einer aktuellen Systemkonfiguration des Endgeräts (2), insbesondere eine Bildschirmhelligkeit, eine Systemlautstärke und eine Anzeigeauflösung, eine Verbindung zu einem externen Speicherlaufwerk, eine oder mehrere aktuell geöffnete Dateien und eine Benutzereingabe, insbesondere ein vom Benutzer festgelegtes Passwort, einen Fingerabdruck und/oder eine oder mehrere vom Benutzer über das Endgerät (2) eingegebene Gesten enthalten.

8. System (1) nach Anspruch 6 oder Anspruch 7, wobei mindestens einer der mehreren Umgebungsfaktoren beim Registrieren der Registrierungs-Umgebungsauthentifizierungsinformation als ein Kontrollfaktor definiert wird, wobei der mindestens eine Kontrollfaktor Bedingungen zum Anwenden anderer Umgebungsfaktoren der mehreren Umgebungsfaktoren bestimmt, wenn das Endgerät (2) mit dem Server (4) authentifiziert wird.

9. System (1) nach Anspruch 8, wobei der mindestens eine Kontrollfaktor beim Registrieren der Registrierungs-Umgebungsauthentifizierungsinformation als ein Anwesenheitsbedingungsfaktor definiert wird, wobei ein Fehlen oder ein Vorhandensein des Anwesenheitsbedingungsfaktors in der aktuellen Authentifizierungsinformation bestimmt, welche Umgebungsfaktoren der mehreren Umgebungsfaktoren die Mehrzahl der mehreren Umgebungsfaktoren bilden, wenn das Endgerät (2) mit dem Server (4) authentifiziert wird.

10. System (1) nach 8, wobei der mindestens eine Kontrollfaktor als ein Wertbedingungsfaktor beim Registrieren der Registrierungs-Umgebungsauthentifizierungsinformation definiert wird, wobei der Wert des Wertbedingungsfaktors, der in der aktuellen Authentifizierungsinformation enthalten ist, bestimmt, welche Umgebungsfaktoren der mehreren Umgebungsfaktoren die Mehrzahl der mehreren Umgebungsfaktoren bilden, wenn das Endgerät (2) mit dem Server (4) authentifiziert wird.

## Revendications

1. Méthode d'authentification d'un terminal avec un serveur sur la base d'un ensemble sélectionné de multiples facteurs environnementaux, dans laquelle chacun des multiples facteurs environnementaux concerne une caractéristique configurable du terminal, dans laquelle chacun des multiples facteurs environnementaux est défini au moins par un identifiant et une valeur, dans laquelle l'identifiant identifie un facteur environnemental respectif et la valeur indique un état de la caractéristique configurable respective, dans laquelle l'ensemble sélectionné de multiples facteurs environnementaux constitue une information d'authentification environnementale personnalisée pour authentifier le terminal avec le serveur,
dans laquelle la méthode comprend les étapes suivantes réalisées par le terminal :
l'enregistrement, à un premier instant, d'une information d'authentification environnementale d'enregistrement du terminal, comprenant :
- l'extraction, pour chacun de l'ensemble sélectionné de multiples facteurs environnementaux, de l'état respectif de la caractéristique configurable concernée du terminal au premier instant et l'établissement de la valeur respective de chacun des multiples facteurs environnementaux en fonction de l'état respectif au premier instant (12) ;
- la génération de l'information d'authentification environnementale d'enregistrement sur la base des valeurs des multiples facteurs environnementaux établies au premier instant (14), dans laquelle l'information d'authentification environnementale d'enregistrement comprend l'identifiant et la valeur respectifs de chacun des multiples facteurs environnementaux ;
- l'envoi de l'information d'authentification environnementale d'enregistrement au serveur pour stocker l'information d'authentification environnementale d'enregistrement (16) ;
l'authentification du terminal avec le serveur à un second instant ultérieur au premier instant, comprenant :
- l'extraction, pour chacun d'un sous-ensemble de l'ensemble sélectionné de multiples facteurs environnementaux, le sous-ensemble comprenant une pluralité des multiples facteurs environnementaux et étant prescrit par une politique, de l'état respectif de la caractéristique configurable concernée du terminal au second instant et l'établissement de la valeur respective de chacun du sous-ensemble de multiples facteurs environnementaux en fonction de l'état respectif au second instant (22) ;
- la génération d'une information d'authentification environnementale actuelle sur la base des valeurs des multiples facteurs environnementaux établies au second instant (24), dans laquelle l'information d'authentification environnementale actuelle comprend l'identifiant et la valeur respectifs pour chacun d'une pluralité des multiples facteurs environnementaux ;
- l'envoi de l'information d'authentification environnementale actuelle au serveur pour authentifier le terminal avec le serveur (26) ;
- la réception d'un message de confirmation d'authentification en provenance du serveur,
dans laquelle la méthode comprend en outre les étapes suivantes réalisées par le serveur :
l'enregistrement, au premier instant, de l'information d'authentification environnementale d'enregistrement du terminal, comprenant :
- la réception de l'information d'authentification environnementale d'enregistrement en provenance du terminal (18) ;
- en réponse à la réception de l'information d'authentification environnementale d'enregistrement, le stockage de l'information d'authentification environnementale d'enregistrement (20), comprenant le stockage de l'identifiant et de la valeur respectifs de chacun des multiples facteurs environnementaux inclus dans l'information d'authentification environnementale d'enregistrement ;
l'authentification du terminal au second instant ultérieur au premier instant, comprenant :
- la réception de l'information d'authentification environnementale actuelle en provenance du terminal (28) ;
- en réponse à la réception de l'information d'authentification environnementale actuelle, la comparaison de l'information d'authentification environnementale actuelle reçue avec l'information d'authentification environnementale d'enregistrement stockée (30), comprenant la comparaison de chacune des valeurs de la pluralité des multiples facteurs environnementaux inclus dans l'information d'authentification environnementale actuelle avec la valeur stockée correspondante des multiples facteurs environnementaux inclus dans l'information d'authentification environnementale d'enregistrement ;
- en réponse à la détermination du fait que l'information d'authentification environnementale actuelle est sensiblement identique à l'information d'authentification environnementale d'enregistrement, l'authentification du terminal (32) par le renvoi du message de confirmation d'authentification au terminal, dans laquelle la détermination comprend la détermination du fait qu'au moins un nombre donné des valeurs respectives de la pluralité des multiples facteurs environnementaux inclus dans l'information d'authentification environnementale actuelle est sensiblement identique à la valeur stockée correspondante des multiples facteurs environnementaux inclus dans l'information d'authentification environnementale d'enregistrement,
dans laquelle au moins l'un des multiples facteurs environnementaux est de plus défini par un niveau de tolérance définissant une plage de valeurs admissibles de l'au moins un facteur environnemental, dans laquelle l'information d'authentification environnementale d'enregistrement comprend le niveau de tolérance, et dans laquelle le serveur détermine que la valeur de l'au moins un facteur environnemental inclus dans l'information d'authentification environnementale actuelle est sensiblement identique à la valeur stockée correspondante de l'au moins un facteur environnemental inclus dans l'information d'authentification environnementale d'enregistrement en réponse à la détermination du fait que la valeur de l'au moins un facteur environnemental inclus dans l'information d'authentification environnementale actuelle est dans la plage de valeurs admissibles définie par le niveau de tolérance,
dans laquelle la méthode comprend en outre l'étape suivante réalisée par le serveur :
- le stockage de la valeur de l'au moins un facteur environnemental inclus dans l'information d'authentification environnementale actuelle pour former un historique de valeurs de l'au moins un facteur environnemental dans des authentifications passées ;
- la mise à jour de la valeur de l'au moins un facteur environnemental inclus dans l'information d'authentification environnementale d'enregistrement stockée avec la valeur de l'au moins un facteur environnemental inclus dans l'information d'authentification environnementale actuelle en réponse à la détermination, sur la base de la valeur de l'au moins un facteur environnemental inclus dans l'information d'authentification environnementale actuelle et sur la base des valeurs de l'au moins un facteur environnemental stockées dans l'historique de valeurs de l'au moins un facteur environnemental dans des authentifications passées, du fait que, pour un nombre donné d'occurrences, la valeur de l'au moins un facteur environnemental est dans la plage de valeurs admissibles définie par le niveau de tolérance, mais non identique à la valeur de l'au moins un facteur environnemental inclus dans l'information d'authentification environnementale d'enregistrement stockée.

2. Méthode selon la revendication 1, dans laquelle les caractéristiques configurables du terminal comportent un ou plusieurs parmi : un contenu de stockage du terminal, des procédés logiciels en cours d'exécution sur le terminal, des programmes logiciels installés sur le terminal, un système d'exploitation du terminal, un état actuel d'une application de navigateur Web actuellement exécutée par le terminal, un ou plusieurs aspects d'une configuration de système actuelle du terminal, en particulier une luminosité d'écran, un volume de système, et une résolution d'affichage, une connexion à un lecteur de stockage externe, un ou plusieurs fichiers actuellement ouverts, et une entrée utilisateur, en particulier un mot de passe établi par l'utilisateur, une empreinte digitale, ou un ou plusieurs gestes entrés par l'utilisateur via le terminal.

3. Méthode selon la revendication 1 ou la revendication 2, dans laquelle au moins l'un des multiples facteurs environnementaux est défini en tant que facteur de commande lors de l'enregistrement de l'information d'authentification environnementale d'enregistrement, dans laquelle l'au moins un facteur de commande détermine des conditions pour appliquer d'autres facteurs environnementaux des multiples facteurs environnementaux lors de l'authentification du terminal avec le serveur.

4. Méthode selon la revendication 3, dans laquelle l'au moins un facteur de commande est défini en tant que facteur de condition de présence lors de l'enregistrement de l'information d'authentification environnementale d'enregistrement, dans laquelle une absence ou une présence du facteur de condition de présence dans l'information d'authentification actuelle détermine quels facteurs environnementaux des multiples facteurs environnementaux forment la pluralité des multiples facteurs environnementaux lors de l'authentification du terminal avec le serveur.

5. Méthode selon la revendication 3, dans laquelle l'au moins un facteur de commande est défini en tant que facteur de condition de valeur lors de l'enregistrement de l'information d'authentification environnementale d'enregistrement, dans laquelle la valeur du facteur de condition de valeur inclus dans l'information d'authentification environnementale actuelle détermine quels facteurs environnementaux des multiples facteurs environnementaux forment la pluralité des multiples facteurs environnementaux lors de l'authentification du terminal avec le serveur.

6. Système (1) d'authentification d'un terminal (2) avec un serveur (4) sur la base d'un ensemble sélectionné de multiples facteurs environnementaux, dans lequel chacun des multiples facteurs environnementaux concerne une caractéristique configurable du terminal (2), dans lequel chacun des multiples facteurs environnementaux est défini au moins par un identifiant et une valeur, dans lequel l'identifiant identifie un facteur environnemental respectif et la valeur indique un état de la caractéristique configurable respective, dans lequel l'ensemble sélectionné de multiples facteurs environnementaux constitue une information d'authentification environnementale personnalisée pour authentifier le terminal (2) avec le serveur, dans lequel le système (1) comprend :
le terminal (2) connecté au serveur (4) par une interface de communication et agencé pour :
enregistrer, à un premier instant, une information d'authentification environnementale d'enregistrement du terminal (2), par :
- l'extraction, pour chacun de l'ensemble sélectionné de multiples facteurs environnementaux, de l'état respectif de la caractéristique configurable concernée du terminal (2) au premier instant et l'établissement de la valeur respective de chacun des multiples facteurs environnementaux en fonction de l'état respectif au premier instant ;
- la génération de l'information d'authentification environnementale d'enregistrement sur la base des valeurs des multiples facteurs environnementaux établies au premier instant, dans lequel l'information d'authentification environnementale d'enregistrement comprend l'identifiant et la valeur respectifs de chacun des multiples facteurs environnementaux ;
- l'envoi de l'information d'authentification environnementale d'enregistrement au serveur (4) pour stocker la première information d'authentification environnementale ;
authentifier le terminal (2) avec le serveur à un second instant ultérieur au premier instant, par :
- l'extraction, pour chacun d'un sous-ensemble de l'ensemble sélectionné de multiples facteurs environnementaux, le sous-ensemble comprenant une pluralité des multiples facteurs environnementaux et étant prescrit par une politique, de l'état respectif de la caractéristique configurable concernée du terminal (2) au second instant et l'établissement de la valeur respective de chacun du sous-ensemble de multiples facteurs environnementaux en fonction de l'état respectif au second instant ;
- la génération d'une information d'authentification environnementale actuelle sur la base des valeurs des multiples facteurs environnementaux établies au second instant, dans lequel l'information d'authentification environnementale actuelle comprend l'identifiant et la valeur respectifs pour chacun d'une pluralité des multiples facteurs environnementaux ;
- l'envoi de l'information d'authentification environnementale actuelle au serveur (4) pour authentifier le terminal avec le serveur (4) ;
- la réception d'un message de confirmation d'authentification en provenance du serveur (4), le serveur (4) étant agencé pour :
enregistrer, au premier instant, l'information d'authentification environnementale d'enregistrement du terminal (2), par :
- la réception de l'information d'authentification environnementale d'enregistrement en provenance du terminal (2) ;
- en réponse à la réception de l'information d'authentification environnementale d'enregistrement, le stockage de l'information d'authentification environnementale d'enregistrement, comprenant le stockage de l'identifiant et de la valeur respectifs de chacun des multiples facteurs environnementaux inclus dans l'information d'authentification environnementale d'enregistrement ;
authentifier le terminal (2) au second instant ultérieur au premier instant, par :
- la réception de l'information d'authentification environnementale actuelle en provenance du terminal (2) ;
- en réponse à la réception de l'information d'authentification environnementale actuelle, la comparaison de l'information d'authentification environnementale actuelle reçue avec l'information d'authentification environnementale d'enregistrement stockée, comprenant la comparaison de chacune des valeurs de la pluralité des multiples facteurs environnementaux inclus dans l'information d'authentification environnementale actuelle avec la valeur stockée correspondante des multiples facteurs environnementaux inclus dans l'information d'authentification environnementale d'enregistrement ;
- en réponse à la détermination du fait que l'information d'authentification environnementale actuelle est sensiblement identique à l'information d'authentification environnementale d'enregistrement, l'authentification du terminal (2) par le renvoi du message de confirmation d'authentification au terminal (2), dans lequel la détermination comprend la détermination du fait qu'au moins un nombre donné des valeurs respectives de la pluralité des multiples facteurs environnementaux inclus dans l'information d'authentification environnementale actuelle est sensiblement identique à la valeur stockée correspondante des multiples facteurs environnementaux inclus dans l'information d'authentification environnementale d'enregistrement,
dans lequel au moins l'un des multiples facteurs environnementaux est de plus défini par un niveau de tolérance définissant une plage de valeurs admissibles de l'au moins un facteur environnemental, dans lequel l'information d'authentification environnementale d'enregistrement comprend le niveau de tolérance, et dans lequel le serveur (4) est agencé pour déterminer que la valeur de l'au moins un facteur environnemental inclus dans l'information d'authentification environnementale actuelle est sensiblement identique à la valeur stockée correspondante de l'au moins un facteur environnemental inclus dans l'information d'authentification environnementale d'enregistrement en réponse à la détermination du fait que la valeur de l'au moins un facteur environnemental inclus dans l'information d'authentification environnementale actuelle est dans la plage de valeurs admissibles définie par le niveau de tolérance,
dans lequel le serveur (4) est en outre agencé pour :
- stocker la valeur de l'au moins un facteur environnemental inclus dans l'information d'authentification environnementale actuelle pour former un historique de valeurs de l'au moins un facteur environnemental dans des authentifications passées ;
- mettre à jour la valeur de l'au moins un facteur environnemental inclus dans l'information d'authentification environnementale d'enregistrement stockée avec la valeur de l'au moins un facteur environnemental inclus dans l'information d'authentification environnementale actuelle en réponse à la détermination, sur la base de la valeur de l'au moins un facteur environnemental inclus dans l'information d'authentification environnementale actuelle et sur la base des valeurs de l'au moins un facteur environnemental stockées dans l'historique de valeurs de l'au moins un facteur environnemental dans des authentifications passées, du fait que, pour un nombre donné d'occurrences, la valeur de l'au moins un facteur environnemental est dans la plage de valeurs admissibles définie par le niveau de tolérance, mais non identique à la valeur de l'au moins un facteur environnemental inclus dans l'information d'authentification environnementale d'enregistrement stockée.

7. Système (1) selon la revendication 6, dans lequel les caractéristiques configurables du terminal (2) comportent un ou plusieurs parmi : un contenu de stockage du terminal (2), des procédés logiciels en cours d'exécution sur le terminal (2), des programmes logiciels installés sur le terminal (2), un système d'exploitation du terminal (2), un état actuel d'une application de navigateur Web actuellement exécutée par le terminal (2), un ou plusieurs aspects d'une configuration de système actuelle du terminal (2), en particulier une luminosité d'écran, un volume de système, et une résolution d'affichage, une connexion à un lecteur de stockage externe, un ou plusieurs fichiers actuellement ouverts, et une entrée utilisateur, en particulier un mot de passe établi par l'utilisateur, une empreinte digitale, ou un ou plusieurs gestes entrés par l'utilisateur via le terminal (2).

8. Système (1) selon la revendication 6 ou la revendication 7, dans lequel au moins l'un des multiples facteurs environnementaux est défini en tant que facteur de commande lors de l'enregistrement de l'information d'authentification environnementale d'enregistrement, dans lequel l'au moins un facteur de commande détermine des conditions pour appliquer d'autres facteurs environnementaux des multiples facteurs environnementaux lors de l'authentification du terminal (2) avec le serveur (4).

9. Système (1) selon la revendication 8, dans lequel l'au moins un facteur de commande est défini en tant que facteur de condition de présence lors de l'enregistrement de l'information d'authentification environnementale d'enregistrement, dans lequel une absence ou une présence du facteur de condition de présence dans l'information d'authentification actuelle détermine quels facteurs environnementaux des multiples facteurs environnementaux forment la pluralité des multiples facteurs environnementaux lors de l'authentification du terminal (2) avec le serveur (4).

10. Système (1) selon la revendication 8, dans lequel l'au moins un facteur de commande est défini en tant que facteur de condition de valeur lors de l'enregistrement de l'information d'authentification environnementale d'enregistrement, dans lequel la valeur du facteur de condition de valeur inclus dans l'information d'authentification environnementale actuelle détermine quels facteurs environnementaux des multiples facteurs environnementaux forment la pluralité des multiples facteurs environnementaux lors de l'authentification du terminal (2) avec le serveur (4).
